# EUROPEAN PATENT APPLICATION

(11) **EP 3 561 757 A1**
(43) Date of publication of application: **30.10.2019**
(21) Application number: 19157541.4
(22) Date of filing: 05.08.2014
(51) Int. Cl.: G06Q 30/02

(54) **METHOD AND SYSTEM FOR ENGAGING REAL-TIME-HUMAN INTERACTION INTO MEDIA PRESENTED ONLINE**

(30) Priority: 07.08.2013 US 201313961071
(62) Divisional of application: 14758725.7
(71) Applicant: Liveperson Inc., New York, NY 10018 (US)
(72) Inventor: BARAK, Matan, New York, NY New York 10018 (US); SCHWARTZ, Schlomi, New York, NY New York 10018 (US)
(74) Representative: Mewburn Ellis LLP

(57) **Abstract**

This disclosure presents methods, systems, computer-readable media, for directing a communications campaign so as to exploit capabilities and information sources provided by social-networking. The techniques generally involve displaying a fan page, tracking user interactions with the fan page, predicting user responsiveness to various types of communications, and selecting and targeting communications to users in a manner predicted to be most beneficial for the campaign. Users may be provided with an interactive application download which enables user web-browsing activities to be tracked in greater detail, and enables users to be selectively chosen to receive communications from an agent. User behaviour is modeled and strategies for communicating with users are continuously evaluated for potential use based on the models.

## Description

### BACKGROUND

The rapid expansion in social networking websites has resulted in opportunities for businesses to accumulate market data, learn about consumer behavior, generate publicity, disseminate information and identify potential high-value customers in new ways. Social networking platforms are powerful communication tools and the social-networking interactions and activities of a community of social networking users generates a detailed and telling trove of data - much of which is not obtainable outside of the social-networking environment.

### BRIEF SUMMARY

This disclosure provides techniques for exploiting social-networking services to enable intelligent gathering and analysis of data for use in dynamically identifying efficient communication and marketing strategies, and improving the dissemination and efficacy of publicity campaigns.

Social networking platforms connect large groups of users who tend to share common interests, backgrounds, and characteristics. Social network users commonly maintain a personal profile page or account through which they submit personal information. This disclosure provides techniques with which the personal information shared by a user can be analyzed to forecast how a user will respond to a specific message, announcement, informative link, or other informational source.

Additionally, social networking platforms are dynamic, and social networking users commonly communicate and engage with interactive content provided through their accounts. A history of these communications and interactions is recorded, stored and constantly updated by the social networking provider. For example, most social-networking platforms offer functionality whereby a user can search for other users by name or affiliation, as well as associate with other users through the network. When receiving an association invitation, a user may agree to or decline the proposed association, as well as categorize the user from which the information was received. When an association is formed, a record of the association is stored at a server. The associated users may then share, suggest or publicize web-based content, petitions, advertisements, or any other type of communications. They may also share in activities, collaboratively work to on tasks, or perform any other type of activity conceivably facilitated by electronic communications and networking.

The history and progression of these social networking communications and activities reveal a tremendous amount of information which can be exploited to improve communications, publicity, marketing and brand-enhancement or brand-loyalty campaigns. If used intelligently, the information can enable a marketer to expand the reach of an advertising campaign, improve the return generated from marketing investments, and trigger documentable consumer responses that can be informatively studied in order to direct subsequent marketing and outreach strategies, decisions and investments.

This disclosure proposes that an interactive engagement server may be used in conjunction with a social networking platform to deliver interactive, web-based content on behalf of any individual, business, entity or other type of association which seeks to engage in an information, publicity, or marketing campaign. Although the techniques presented herein may be most foreseeably employed for marketing or business purposes, the techniques are equally applicable to and practical for the implementation and management of any other type of campaign for the purpose of identifying a market, target audience, or receptive segment of social networking users. The content may be presented as a publicity or advertising campaign and may be designed to attract users likely to be or become interested in a product, brand, service, theme, political movement, message or any other concept for which attention is sought. However, for purposes of simplicity and ease of explanation only, this disclosure will, in general, provide these inventive techniques by describing how the techniques may be used to enhance a marketing campaign managed on behalf of a client selling a product to potential customers. This particular explanatory focus shall not be construed as limiting the scope of the disclosure, as the disclosed techniques are described so as to be easily applied by an ordinarily skilled artisan to any scenario in which publicity, information dissemination, and communications efficiency and efficacy is desired.

Amongst other thing, this disclosure describes a computer-implemented method which comprises transmitting social network application information, wherein the social network application information is used to provide a social network application interface on a social networking platform, receiving information depicting interactions involving the social network application interface, generating interaction data based on the received information, wherein the interaction data is generated by a computing device, forecasting likelihoods of outcomes occurring in response to providing content through the social networking platform, wherein forecasting likelihoods is based on the generated interaction data, deriving an interaction strategy for selectively providing the content, wherein the interaction strategy is based on the forecasted likelihoods, and transmitting content information, wherein the content information includes information depicting the interaction strategy, wherein the content information is used to provide the content on the social networking platform, and in accordance with the interaction strategy.

This disclosure also describes a system and a computer-program product for transmitting social network application information, wherein the social network application information is used to provide a social network application interface on a social networking platform, receiving information depicting interactions involving the social network application interface, generating interaction data based on the received information, wherein the interaction data is generated by a computing device, forecasting likelihoods of outcomes occurring in response to providing content through the social networking platform, wherein forecasting likelihoods is based on the generated interaction data, deriving an interaction strategy for selectively providing the content, wherein the interaction strategy is based on the forecasted likelihoods, and transmitting content information, wherein the content information includes information depicting the interaction strategy, wherein the content information is used to provide the content on the social networking platform, and in accordance with the interaction strategy.

### BRIEF DESCRIPTION OF THE DRAWINGS

Aspects of the disclosure are illustrated by way of example. In the accompanying figures, like reference numbers indicate similar elements, and:
Fig. 1 is a diagram depicting example components used in accordance with the techniques of the present disclosure.
FIG. 2 is a screenshot depicting an example user chat interface provided in accordance with certain techniques disclosed herein.
FIG. 3 is a screenshot depicting an agent chat interface provided in accordance with certain techniques disclosed herein.
FIG. 4 is a screenshot depicting an example user chat interface which facilitates three-party chat conversation using techniques of the present disclosure.
FIG. 5 is a screenshot depicting an example user chat interface during a three-party chat conversation.
FIG. 6 depicts an example agent chat interface during a three-party chat conversation involving an agent.
FIG. 7 depicts an example posting of information about social networking user interaction with a client.
FIG. 8 depicts example engagement server operations in accordance with the present disclosure.
FIG. 9 depicts example engagement server operations in accordance with the present disclosure.
FIG. 10 depicts an example library which, in accordance with certain techniques of the present disclosure, may be used to store social-networking user information in user profiles.
FIG. 11 depicts example chat engagement operations involving agents and users in accordance with certain methods of the present disclosure .

### DETAILED DESCRIPTION

Several illustrative embodiments will now be described with respect to the accompanying drawings, which form a part hereof. While particular embodiments, in which one or more aspects of the disclosure may be implemented, are described below, other embodiments may be used and various modifications may be made without departing from the scope of the disclosure or the spirit of the appended claims.

The methods, techniques and systems presented herein may involve using one or more computational platforms with capabilities for data storage, computation and electronic network communications. The term "computational platform", "terminal" or "device" shall be understood as referring to any type of computational apparatus or network of apparatuses. For example, a computational platform may be a network server, and this disclosure will hereinafter use the term "engagement server" to refer to such a computational apparatus which is configured to perform certain of the functions which will be described hereinafter.

The disclosure of engagement server methods and functionality presented herein is applicable to servers in any of the configurations or dispositions which will be recognizable or foreseeable to a person of ordinary skill in the many arts to which this document is pertinent. As an example only, an engagement server within the scope of this disclosure may be connected to other servers and user communication terminals through an internet, mobile, satellite, wireless or other network connection.

This disclosure describes how an engagement server may be used to interface with users of any number of social-networks and leverage social network access in performing data accumulation, behavioral tracking, forecasting, strategic decision-making and machine-learning tasks on behalf of clients seeking to formulate, implement and/or dynamically alter one or more targeted campaigns which involve electronic or network communications. An engagement server executing techniques within the scope of this disclosure may be applied to any type of campaign involving communications. For example, the techniques presented herein shall be understood as being applicable by an engagement server for the purpose of advancing a communications campaign which is for advertising, marketing, providing customer service, surveying, information-gathering, academic study, political candidacy, activism, fundraising, publicity, recruiting, brand-enhancement, outreach, public interest or health, public awareness, or any other activity which may be enhanced by exploiting the vast information amalgamation and crowdsourcing capabilities which will be described herein.

Hereinafter, a client will refer to any party which subscribes to or is provided with the services facilitated by an engagement server which implements techniques of this disclosure. The engagement server may be used for the purposes of forecasting the results of alternatively-selectable candidate strategies for executing a client's campaign. A strategy may be understood as one or more possible ways in which network-based communications, advertising or publicity may be customized, conducted or directed. An example of a simple candidate strategy could involve the possibility of a client paying for and providing advertising information. The advertising information could be information for installing a specific advertising banner on a chosen web page or a profile page (also referred to herein as a fan page) of each user of a social-network.

Other more targeted strategies could incorporate specific user information accumulated using techniques which will be described subsequently. An example of one such strategy could include providing the same advertising banner only to a subsection of users who have met a certain criteria. For example, one such criteria could target the banner so that only users of a certain age and living in a certain location receive the banner.

A strategy may take other forms as well. Strategies may be formulated which are specific to individual users rather than groups of users. For example an implemented strategy may specify communication methods uniquely chosen to be used to communicate with a specific user, the message content to deliver to the user, the frequency of attempts to communicate with the user, or the information to be solicited from the user. A strategy with respect to an individual user may even involve avoiding communications with the user, or even discontinuing data gathering, analysis, predictions, or behavioral tracking of the user. A strategy to avoid a user, or avoid gathering a user's data may be effective in dealing with a user who holds a negative opinion of the client and is unlikely to ever view the client favorably.

Based on the forecasted results, the available resources of the client, and the client preferences and goals, the engagement server may dynamically select and implement strategies calculated to be most advantageous for the client. In addition to this multi-faceted strategic decision-making, the engagement server may provide or facilitate client communications in accordance with any of the selected strategies.

Following these communications, the engagement server may perform further behavioral tracking and data gathering for the purposes of determining or estimating the results of the communications made in response to the strategy decisions. These determinations or estimations may then be stored at the engagement server where they may be used for machine-learning or data mining purposes, to include reformulation or modification of any of the algorithms executed by the engagement server. The determination and estimations may also be used for the purpose of informing new or updated forecasts which may be used in turn for making subsequent strategy decisions.

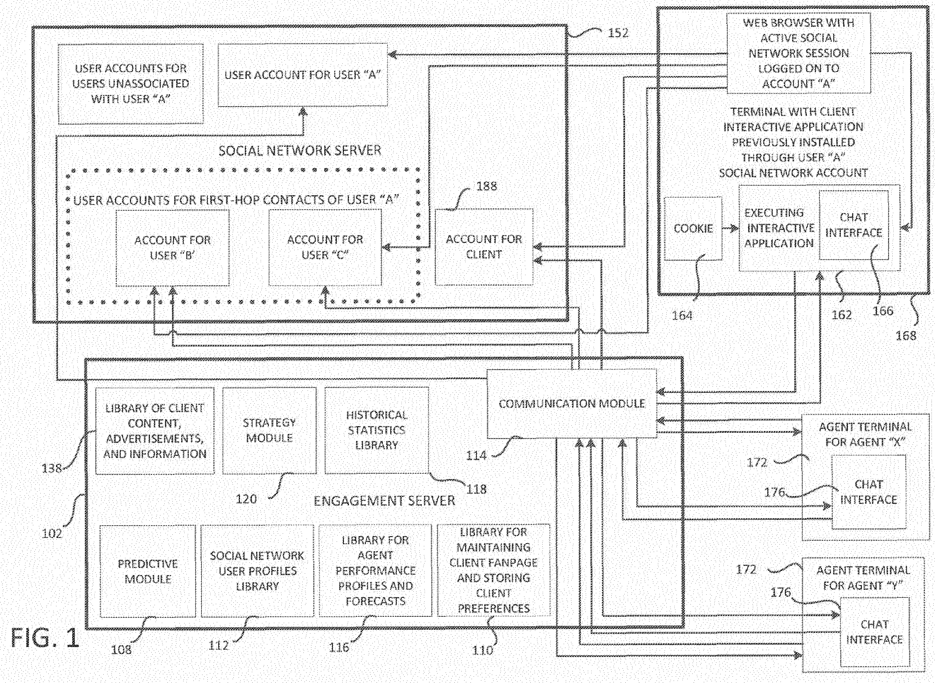

In order to perform these functions, the engagement server may be disposed so as to contain several different data storage libraries and functional modules. FIG. 1 displays an example engagement server 102, and its disposition within a network which provides communication links accessible to users of a social networking platform. As depicted in FIG. 1, the social networking platform is centrally controlled and administered at a social network server 152. For ease of explanation within this disclosure, the engagement server 102 will hereinafter be described as a server which exists separately from the social network server 152, but which is configured to communicate with the social networking server 152 through at least one network communication channel. However, this disclosure is also intended to cover any other conceivable server and network arrangements which may be used to implement the techniques described herein.

For example, notwithstanding the configuration of servers 102, 152 shown in FIG. 1, this disclosure shall be understood as involving any similarly functional server arrangements in which an engagement server is co-located with a social network server, or in which a social network server provides not only a social networking platform, but also additional functionality similar to the functionality of the engagement server 102. Moreover, the functionality of an engagement server may be obtained through the use of more than one server, each of which performs only some of the functions which will be described with regards to the server of FIG. 1. Alternatively, several servers may be disposed such that each server provides all of the functionality of engagement server 102. In such a case, multiple similar or identical engagement servers may be used so as to distribute engagement server processing tasks, increase engagement server storage capacity, or provide computational capabilities.

An engagement server 102 of the present disclosure may include any combination of the computational modules and data storage structures, including modules and libraries such as those depicted as being disposed within the engagement server 102 of FIG. 1. For example, an engagement server 102 may include a strategy module 104, historical statistics library 106, predictive module 108, and a library for storing fan page information for maintaining the fan pages of clients 110. As depicted in FIG. 1, client preferences may also be stored in library 110. Client preferences may include information about the campaign goals of the client. Additionally or alternatively, the client preferences may also include information for modifying and/or updating a fan page of the client maintained at the engagement server.

With respect to a client's campaign goals, these goals may be explained and depicted by any variety or combination of information, logic and metrics. An incomplete and exemplary list of possible client goal information could include information depicting a number of social network users a client wishes to target, a desired targeting success rate, an intended frequency with which a client wishes to target users, a desired relative usage frequency of any of the various communication channels (i.e. chat, social network page posts, texting, email, webpage advertising banner displays, etc.) available for contacting a user, a volume or gross dollar amount of sales which a client wishes to generate, or a client's willingness to use risky or more unpredictable communication strategies in the hopes of bigger payback.

Client goal information may depict goals which are uniquely defined for specific user groups. As one example of goals defined in this way, client preference information could indicate a preference for engaging a group of users - such as elderly users - less than a certain number of times, or less frequently than a specified limit. As another example, a high sales target could be set with respect to one group of users to which a client wants to focus its sales efforts, while at the same time a lower sales target could be set with respect to another group of users with which a client is less concerned.

An engagement server 102 may also include a library 112 for storing individual "user profiles" containing data related and indexed to specific, individual social network users. Each user profile may store many types of data, such as accumulated data, calculated data, or data generated by modeling or predictive algorithms executed by predictive module 108. For example, a user profile may store personal, professional, or financial information about the user whom the profile documents. This type of information may, in some cases, be gathered by accessing a user's social network fan page or a social network fan page of a social-working associate of the user. However, several other methodologies within the scope of this disclosure may also be used to obtain such data. Hereinafter the term "user" will be used to refer to a social network user who maintains an account with a social-networking server 152 with which engagement 102 communicates. Thus, any person or entity for which a social network account is registered or maintained, will be referred to using this term.

A user may use the social network to associate with a client of the engagement server 102, or may be unaffiliated with the client. Moreover, any user may use the social-network to communicate or associate with first-hop contacts (also referred herein as the user's associates, friends, or social-networking associates of the user). A user's first-hop contacts may be understood to be users who have directly communicated with or associated with the user via the social-network. Hereinafter, reference to a social-network participant as a next-hop contact shall not imply that the participant has or has not associated or communicated with an engagement server 102 client.

A user profile in library 112 may also store interaction data depicting a user's web browsing activities or patterns, as well as, or in addition to, any data depicting the user's social-networking account communications or interactions with, or responses to, the client's agents, publicity material, or any other element of a campaign on behalf of the client. Any user profile may also be used to store predictive data generated by predictive module 108. Within any user profile, the predictive data may include data relevant to choosing a strategy for engaging the profiled user based on forecasted user responses to various candidate campaign engagement strategies.

Historical statistics library 106 may be used to store information or data which is determined with respect to a wide sample of social-networking users, rather than being specific to individual users. For example, statistics library 106 may store an overall response rate metric depicting a percentage of users who have historically responded to a specific type of campaign content. Although statistics library 116 does not store data or information with respect to an individual user, when specific information about an individual user is obtained, the engagement server 102 may update (recalculate) statistics in library 106 so that the user-specific information is reflected in the sample data. Information and historical statistics stored in library 106 may be used by predictive module 108 to model and forecast the behavior and responsiveness of individual users and groups of users.

As this disclosure will later describe in greater detail, certain evaluated strategies may involve the strategy module 120 selecting a particular client agent to contact or engage a user. An agent may be selected from amongst a team of agents whose likelihoods of successfully engaging the user may be forecasted or modeled by the predictive module 108. In such a situation, the strategy module 120 may select an agent based on the forecasted engagement success likelihoods and the client's campaign goals, while ensuring that preferences stored in library 110 are satisfied.

Any time an agent selection strategy is implemented, the profile of a user engaged by a particular agent may be updated to reflect details of the agent's attempt to engage the user and the outcome of the engagement effort. This information may later be used to forecast future user responses or model future user behavior.

So that agent success likelihoods may be forecasted, data depicting individual agents' performance histories is stored in agent profiles. The agent profiles are maintained in the library for agent performance profiles and forecasts 116. In addition to containing performance history data, an agent's profile may also contain personal information about the agent. When personal information about an agent is stored in an agent profile, the predictive module 108 may use the personal information in conjunction with the performance data to forecast or model expected future agent performance in engagements with specific users.

As this disclosure will subsequently explain in greater detail, the engagement server 102 may maintain a social networking fan page on behalf of a client. Each fan page may be established, accessed, updated and monitored through two-way communications between the engagement server 102 and social networking server 152. Specifically, within the engagement server 102, communication module 114 may control transmissions of information to the social network server 152. Communications module 114 may access client password information or other access credentials stored in library 110. By transmitting this information to social network server 152, the engagement server 102 may gain access to the social network account 188 maintained on behalf of the client.

The social network account 188 may be understood as an amalgamation of any networking features and networking information provided to the client (or, more precisely, provided to the engagement server which maintains the account for the client) in connection with the client's maintenance of an active registration with the social network server 152. Additionally, the account 152 may also be understood to include any information or content which the client has provided to the social network server 152 for the purpose of maintaining the client fan page.

The engagement server 102 maintains client fan pages so as to display information, photographs, interactive media, or any other content which a client wishes to include on its fan page. As will be explained in greater detail in subsequent paragraphs, the predictive module 108 is used to periodically forecast responses to various alternative strategies for selectively displaying certain client content on the fan page. The strategy module 120 may then use these forecasts to select a strategy which is most likely to meet the client campaign goals and accommodate the client preferences stored in library 110.

Amongst other functions, a client fan page may serve to attract crowds of social-networking users to connect with the client through the fan page. The content on the fan page may be chosen and manipulated to increase the percentage of attracted users who are genuinely interested in the client or easily persuaded to embrace the client's message or campaign. In this way, by identifying social networking users affiliated with a client fan page, the engagement server 102 may be able to preliminarily focus the scope of a marketing campaign on users who are more likely than average to be responsive to the campaign.

Additionally, by providing the fan page and tracking user interactions involving the fan page, the engagement server 102 may be able to accumulate and synthesize important information about users who associate with the fan page and the social-networking relationships they maintain. For example, on many social networking websites, when a user associates with a fan page, the account holder may be able to see the declared preferences of the user, information about the user's background (employer, birthdate, city of residence), and/or interest or hobby groups which the user has associated with through the social network. Additionally, the account holder is linked to the sub-network of social networking contacts who are connected with the newly-associated user. An example of this linking may be understood by considering Facebook ©. When a Facebook user joins a fan page by "friending" the fan page, the account holder may, in some circumstances, see the names, as well as other information, of first-hop contacts who are associated with the joining user.

By identifying users who have connected with a client fan page and these users' first-hop contacts, the engagement server 102 may obtain a large data sample which may be mined in any number of ways to increase the effectiveness of a client campaign. Mined data from such a sample may be used by predictive module 108 to forecast responses to client content on the, as well as to identify social networking users who are most likely to associate with the client in response to a suggestion or invitation. For example, because social networking associations tend to involve users who have similar interests and preferences, a list of first-hop contacts will often include a disproportionate number of people who may be or may become interested in the client's campaign. By accumulating and mining data from these lists, engagement for server 102 may further identify likely client customers within the segment of users who have immediately associate with the client fan page. By accessing the client's social network account 152 on behalf of the client, the engagement server 102 may use standard networking communications features provided through the account 152 to send messages and invitations to users identified in this way.

Moreover, within certain social networks, the engagement server 102 may be able to access valuable information about users who are neither first-hop contacts nor are associated with the client fan page. For example, on most social networks, access to an account enables the names of at least a portion of other users to be obtained, whether or not these users have associated with the client's fan page. Based on the names of these users and any other ascertainable information accompanying the names, the engagement server 102 may identify likely client customers to whom fan page messages and invitations may be selectively delivered.

These selectively targeted communications may be designed to inform users about the fan page and convince them to associate with it. In certain embodiments or modes of operation within the scope of this disclosure, the engagement server 102 may be programmed in a manner intended to maximize the number of users who associate with the client. Additionally, or alternatively, the engagement server 102 may be programmed so as to communicate with users in a manner intended to attract only users who are likely to be genuinely interested and/or responsive to the client's campaign communications. The engagement server 102 may also be configured to communicate with users in accordance with any number of rules or preferred modes of operation specified by the client preference information stored in library 110. For example, client preference information may specify that messages and invitations to join the client's fan page be submitted only to users whose social networking information indicates a residence within a targeted state or membership within a demographic targeted by the client.

The following example is provided to demonstrate how the engagement server 102 may apply selective targeting of preliminary messages and fan page invitations based on information about users who have not yet associated with a client's fan page. The example relates to a hypothetical client using certain techniques of the present disclosure to implement a targeted marketing campaign for selling a product favored by a specific ethnic group. In such a case, the engagement server 102 could be programmed to send invitations or preliminary messages to users having first or last names typically found only within that ethnic group. Alternatively, the engagement server could operate to send these communications only to first-hop users having such last names.

At any point at which the engagement server 102 accumulates information about a user, it may build a profile of the user and save the profile in the library for social network user profiles 112. Alternatively, profiles may be initiated only after a response from a user has been received, a threshold amount of information about the user can be accessed, the user has associated with the client fan page, or some other condition has been satisfied.

In one possible mode of operation, the engagement server 102 constructs a separate user profile for each user who is selected to receive an initial communication or joins the client fan page. In this mode, when initial communication is directed to a user, the profile of the user may be initiated so as to contain some or all of the information about the user which is accessible at that time. Initiation of the user profile also may involve recording the date, time and type or content of the initial communication. Subsequently, any response from the user may also be depicted in the user's profile. A depiction of a response could include any information about whether the user associated with the client, activated content provided on the client's fan page, posted on the client's wall, or suggested the client's products to first-hop contacts. Within the scope of this disclosure, other possible response data saved in a user profile could depict a volume of first-hop users joining the client fan page following the joining of another user whom the first-hop contacts are associated with.

Depending on the social network being used and user account privacy settings, information about a user's friends or social networking associates (first-hop contacts) may be accessible to the engagement server 102 whether or not the user has joined the client fan page. In some cases, this information may only become accessible upon the user associating with the client. At any time at which information about a user's friends or associates becomes available to the engagement server 102, the engagement server 102 may initiate or update the user's profile to depict some or all of these first-hop contacts.

In addition to names of first-hop contacts, a user profile may also be updated to store information about the user's relationship to any first-hop contact. For example, by analyzing a user's fan page, engagement server 102 may be able to determine that the user is a family member or spouse of a first-hop contact whose identity is depicted in the user's profile. When such a determination is made, the engagement server 102 updates the user's profile in library 112 to detail the relationship between the profiled user and the first-hop contact. When any type of information about a first-hop contact is stored in a user profile, the predictive module 108 may analyze the information to determine its predictive value for modeling or forecasting the profiled user's likely response to various campaign strategies. Information determined to have predictive value may later be used in predicting, modeling or forecasting the user's behavior. The predictive module 108 may similarly analyze and/or use the information for modeling or forecasting the first-hop user's likely responses to campaign strategies.

At any time or series of times following the creation of a user profile, information in the profile may be provided to the predictive module 108 in order to generate predictive forecasts about the user. Information from other user profiles, client preference information and historical statistics may also be provided to the predictive module 108 so that this information may similarly be used in the predictive process. The predictive module 108 may synthesize, combine and use this information in any manner suitable for obtaining valid prediction results.

Synthesizing information may include quantizing information by summarizing information using customized variables or metrics, and observations corresponding to these metrics. One example of information quantization could involve counting the number of first-hop users depicted in a single user's profile. Another example could include using a user's profile to calculate an average number of monthly client fan page visits made by the profiled user. In these cases, quantization could involve initializing and updating data storage structures such as variable arrays, vectors or matrices. These structures may include elements which are each referenced to a specific user profile. When quantization is performed with respect to a user profile in the manner described above, the number of first-hop users and the monthly visit frequency may be stored in such elements referenced to the quantized user profile.

Once quantization is performed, variable arrays may be analyzed for predictive value using any number of techniques. For example, predictive values may be determined by calculating correlations amongst variables, using regression-analysis techniques, or through the use of principal component analysis. Variables determined to be informative may then be used to model or forecast responses to campaign engagements involving various contemplated strategies.

An example prediction executable by the predictive module 108 could involve analyzing a user's profile after the engagement server 102 has accessed a list of first-hop contacts determined with respect to the profiled user. Here, the predictive module 108 could be used, for example, to analyze the user profile to calculate a likelihood of a first-hop contact purchasing a product which the client desires to sell through a marketing campaign. Alternatively, the same likelihood could be calculated with respect to the user linked to the user profile. Regardless of the type of forecast being executed, the predictive module 108 may process inputted data or execute algorithms in any way appropriate based on the forecast at hand.

One example method of preliminarily forecasting a profiled user's purchasing likelihood will be provided for illustrative and explanatory purposes only. This example forecasting process could involve the predictive module 108 first identifying a baseline forecast suitable for a hypothetical social-networking user situated similarly to the profiled user. This could be done by accessing historical statistics from the historical statistics library, and analyzing information in the user profile in light of this historical information. By way of example only, the historical statistics used in this process could include calculated correlations between various user characteristic or personality variables derived from user accounts, and campaign outcome data depicting the results of directing previous campaigns to user's exhibiting certain characteristics.

An example historical statistic could specify an amount of abnormal purchasing, as compared to the population of users-at-large, done by users who displayed a specific preference on their social networking page. Another historical statistic could indicate historical correlation between users' educational attainment and frequency of purchasing in response to a campaign. The historical statistics library may contain any additional or other historical statistics, metrics and data which may be suitable for use as inputs in predictive modeling, machine-learning or artificial-intelligence predictive processes. Any such suitable historical data may be used by the predictive module in the process of making any prediction, forecast or estimate within the scope of this disclosure.

After generating the baseline forecast with the user profile information and historical data, the predictive module 108 could use first-hop user information in the user's profile to determine adjustments to the forecast. Here, first-hop users depicted in the user profile may be identified, and any existing profiles of these first-hop users may be evaluated. If these additional profiles indicate that the first-hop users have an unusual tendency to purchase the client's products, participate in activities associated with the client's product, or respond to communications on behalf of the client, the forecast may be positively adjusted based on this information.

As described previously, strategy module 120 is used to evaluate predictive module 108 forecasts and make campaign strategy decisions based on these forecasts and client goals and preferences depicted in library 110. Whenever strategy module 120 makes a strategy decision with respect to a user, information about the forecast or decision may be saved in the user's profile. Also, depictions of the forecasts used to make the decision or the algorithms or processes used by the predictive module 108 to generate these forecasts may be saved, as well as an indication of the variables, information or data which most affected the forecast or decision. In this way, a detailed record may be maintained so that, with respect to any individual user, the past effectiveness of any algorithm or predictive technique may be understood. Based on this understanding, algorithms and predictions may be adjusted based on the user to which they will be applied,

The engagement server 102 may maintain any client fan page so that an interactive application 162 (the interactive application 162 is depicted after having been downloaded) is offered for download on the fan page. The interactive application 162 may be code capable of being uploaded and installed within a computer or mobile device 168 utilized by a user (hereinafter referred to as a "host device" or "user terminal") to link to the client fan page. Once installed, the code may be executed within the host device 168. Execution of the code may cause the computer device 162 to periodically communicate with the engagement server 102, either in response to a user command, or as dictated strictly by the installed code.

Moreover, the interactive application 162 code, when downloaded by the host device, may be accompanied by code for installing a cookie 164 on a web browser within the host device. The cookie 164 may include code which executes during use of the web browser, tracks user interactions with the web browser, and transmits information depicting the interactions to the engagement server 102.

The interactive application 162 may be attractively presented as a way for a user to obtain specialty information about the client or specialty features for interacting with the client. For example, the interactive application 162 may be presented as a way for the user to obtain access to videos, coupons, information about discounts, free software, or any other attractive capabilities. The interactive application 162 code may further be written so that, when a user downloads the application, the user is prompted to provide the engagement server 102 with access to control communication features and channels of the user's social-networking account. In this way, the interactive application 162, upon being downloaded, may enable the engagement server 102 to obtain information about the user account contained within social networking server 152.

Many social networking platforms enable users to designate certain account access and information retrieval permissions to interactive application providers (such as engagement server 102, in this case) when the user downloads an application from the provider. Facebook ©, for example, provides a system whereby a user can provide certain permission tokens upon downloading an application. When a Facebook user downloads an application, the user may be prompted to provide the application provider with requested account access and information retrieval permissions. One such requested permission may be permission for proxy access to the user's account to post on the user's wall. Another such requested permission may be permission to obtain the user's personal information.

When a Facebook user provides permissions upon downloading the application, a token is communicated to the application provider. The token is a unique string which identifies the user account, the granted permissions, and the application provider to which the permissions are granted. The social-network server also stores a copy of the token, in combination with the access credentials which identify the application provider to which the token is granted. Subsequently, the application provider may periodically use the token, in combination with application provider credentials, to validate the permissions granted by the user, and access the user's account or personal information in a manner within the scope of the granted permisssions. Once permissions are granted and a token is provided, the application provider may use the associated permissions to obtain account information or access without any further input or participation on the part of the user.

Moreover, when the social-networking server 152 is a Facebook server, certain permission tokens granted to an application provider enable the provider to obtain access to a statistics library maintained by Facebook to track user account histories. The statistics library contains detailed information and metrics about users' usage of their accounts, and certain tokens enable access to the history data related to the user account from which the token was provided. Thus, when a user downloads an interactive application, and elects to provide access or information retrieval permissions to an application provider, the application provider may use the resulting token to access a wide swath of interaction data depicting the user's Facebook activities.

When a user downloads the interactive application 162, a user profile may be initiated in library 112, and information about the download may be stored in the profile. Information about the download may include the download time and date, and IP address information for the terminal 168 at which the download occurred. Alternatively, if a profile has already been activated for the downloading user, the profile may be updated to reflect the information about the download.

Following the download, the engagement server 102 may periodically update the user profile to reflect any accessible information about the users' activities. This information may include any such information which may be obtained from social-networking server 152, using any authorization tokens issued in response to permissions granted by the user.

The information may also include data depicting the user's web-browsing activities tracked by the cookie 164, as well as information about the user's utilization of the interactive application 162. By cross-referencing the IP addresses in user profiles with an IP address accompanying a transmission of tracking data from a user terminal 1 68, engagement server 102 may properly attribute data to the appropriate user and select the appropriate user profile in which to store the data. For example, the interactive application 162 code may be designed to cause the host device 168 to transmit to the engagement server 102 each time the user activates or interacts with the application 162. The transmission may include information about interactive application 162 content or features which the user interacts with. In this way, additional sources of data depicting a user's interaction with client content may be obtained for the purpose of modeling or forecasting future responses to potential campaign strategies.

The cookie 164 may also be used to track the user's browsing activities within the social networking site. This browsing information may also be transmitted to the engagement server 102. The engagement server 102 may, amongst other things, analyze the information to identify the user's social-networking first-hop contacts who receive the most social-networking attention from the user. In this way, a user's profile may be periodically updated with information depicting the amount of attention the user gives to the various social-networking friends and associates identified in the profile. This information may be used to update statistics stored in historical statistics library 118. The information may also be evaluated by predictive module 108 in generating forecasts or models related to the user's responsiveness to campaign engagement strategies, or to a first-hop contact's responsiveness.

As described above, library 116 may be used for storing information related to sales or customer service agents working on behalf of the client to provide targeted sales, marketing, information, or customer support services directed to users identified by the engagement server 102. These customer service agents may be agents working at a computer terminal 172 with real-time network communications capabilities. Through network communications channels, the engagement server 102 continuously monitors the agents' activity and serves as a relay mechanism between agents and the social-network users whom they contact.

In one embodiment, the interactive application 162 offered on the client fan page may include code for activating a chat or other messaging interface 166 for using a communications channel between the user and a customer service agent. The interface 166 may be controlled and activated by commands transmitted from the engagement server 102. When the interface 166 is active, it enables 2-way communications between the user and a customer service agent. The communications, whether transmitted from the host device 168 or agent computer terminal 172, may be relayed by the engagement server 102. In this way, the engagement server 102 may analyze an ongoing communication session between a user and a customer service agent.

In addition to control of the chat interface 176, the engagement server 102 may be configured to control access to the channel. In other words, the engagement server 102 may select an agent terminal 172 to have communications access to the channel and may activate or deactivate this access. The engagement server 102 may access additional communication channels (referred to hereinafter as "agent notification channels") which may be used to inform selected agents when they will placed in a communications session through an activated channel. In this way, the engagement server 102 may select an agent to engage a user via the 2-way communications channel. Without the user knowing, the engagement server 102 may use an agent notification channel to provide the selected agent with information about the user and instruct the agent to provide a greeting to the user.

The engagement server 102 may use web-browsing and interaction data provided by the cookie 164 to schedule a communication session to occur at an advantageous time for the client campaign. For example, information gathered by cookie 164 may enable the engagement server 102 to prompt an agent-initiated engagement when the user is visiting a website operated by the client, or when the user is searching online for products or services which the client offers.

If the agent engages the user by providing a greeting which the user responds to, an ensuing two-way communication session between the agent and user may be managed and monitored by the engagement server 102, which facilitates the communication by relaying messages in both directions. During or after the communication with the user, the engagement server 102 may update the user's profile within library 112. Updating the user profile may involve adding information about the user's response to the agent's greeting, information depicting the user's or agent's communications, an outcome of the communication or any other information about the user learned from the communication. The chat interface 176 provided to the agent may include a communications feature which enables the agent to provide the engagement server 102 with additional information about the chat session. As will be explained in more detail in subsequent paragraphs, this information may be used at the engagement server 102 as a mechanism for verifying the validity of artificial intelligence forecasting or modeling based on algorithmically derived data obtained during the communication engagement.

For example, based on the monitored communications, the engagement server 102 could generate and store data depicting the length of the communication, keywords used by the agent, a number of questions asked by the user, a price requested or indicated as acceptable by the user, the name of the agent or any other information which could be of use in performing future modeling or forecasting with regard to any users, or determining future campaign strategies. The engagement server 102 could analyze text communicated by the user to determine if the user has decided to buy a client product or service or obtain additional information about the client. Simultaneously, the engagement server 102 may analyze web-browsing information generated by the cookie 164 on the user's computer to determine if the user has decided to make an internet purchase or perform other internet activity desired by the client.

While an ongoing communication session is monitored, the predictive module 108 may execute predictive or modeling algorithms which analyze the communications in an attempt to determine current information about the user. For example, the predictive module 108 may execute algorithms which apply machine learning techniques to analyze text provided by the user. The algorithms may be executed so as to model the user's disposition towards the client's campaign and information provided by the agent. Thus, such an algorithm could be executed to model a user's needs, desires, spending constraints, time constraints, mood, or expectations in a manner relevant to the client campaign and ongoing agent-user communications. Once such models are generated, additional algorithms or algorithmic modules can use the models, in conjunction with any other information stored by the engagement server 102, to predict which products, services, or content the user will be most responsive to. Additionally, or alternatively, the algorithm could predict future user behavior in a more general manner. For example, an algorithm could predict that, regardless of the agent's efforts or strategy, the communication session is unlikely to lead to a sale or other desired outcome. As another example, the algorithm could be used to predict whether or not a large purchase is likely to occur.

When a predictive module 108 algorithm is used to model user disposition and forecast responses in this way, the engagement server 102 may use an agent notification channel to transmit a message to the agent. Such a message may provide information determined to be useful in light of the disposition or forecast. For example, such a message could recommend that the agent's communications with the user emphasize products, services or content determined by the predictive module 108 to have a high likelihood of eliciting favorable user responsiveness. As another example, a message could simply inform the agent about the user disposition indicated by the model, or the forecasted responsiveness of the user.

During a communication session between an agent and user, or anytime an algorithm at engagement server 102 models any aspect of a user's disposition or forecasts user responsiveness in any way, the engagement server may identify content to provide to the user by referencing the library for storing client content, advertisements and information 138. Within the engagement server 102, the library for storing client content, advertisements and information 138 stores content indexed to searchable scheduling instructions. The instructions specify when, how or to whom the content should be provided. Content in library 138 may be initially provided by the client and marked by the client with the instructions specifying the content for delivery to certain users or in certain situations. When content from library 138 is recommended by engagement server 102 and provided by an agent to a user, the engagement server 102 may generate and store data depicting usage of the content. Over time, the engagement server 102 may analyze this data to determine that certain content or delivery instructions are effective or ineffective for the client's campaign. When such a determination is made, the predictive module may execute a predictive algorithm to analyze potential modifications to the content or delivery instructions, and determine which modifications will yield improved campaign results for the client. The engagement server 102 may then modify the content or delivery specifications in library 138 based on the forecasting results.

Each instance of content may be stored with searchable index or indexing parameters. The indexing parameters may be formatted so as to enable searching for content using predictive module outputs depicting a user's disposition or a responsiveness prediction. For example, when an algorithm in the predictive module 108 is used to model a user's disposition, the algorithm may output a descriptive word, number, code or parameter to indicate any aspect of the disposition. This outputted information may be compared to indexes or indexing parameters in library 138. When a match with an index is determined, the stored content associated with the index may be accessed and communicated to the agent. In this way, when a model indicates a certain characteristic of a user's disposition, the engagement server 102 can easily identify and access content prescribed for a user whose disposition includes that characteristic. The agent may then use or emphasize this content in the ongoing conversation with the user. Also, in certain circumstances, the agent may directly forward the content to the user.

Prescribed content stored in library 138 may take any form which is communicable to a user. For example, stored content may be critical words, phrases, questions, or messages which are preferred by the client or which have been determined to be effective in particular situations. Stored content could also include URL links to webpages containing information about a particular product or product type. Other types of content could involve photographs, links for downloading additional interactive applications utilized by the client, or contact information for sales specialists, managers or other representatives of the client who may be in a position to further advance the client's campaign with respect to the user.

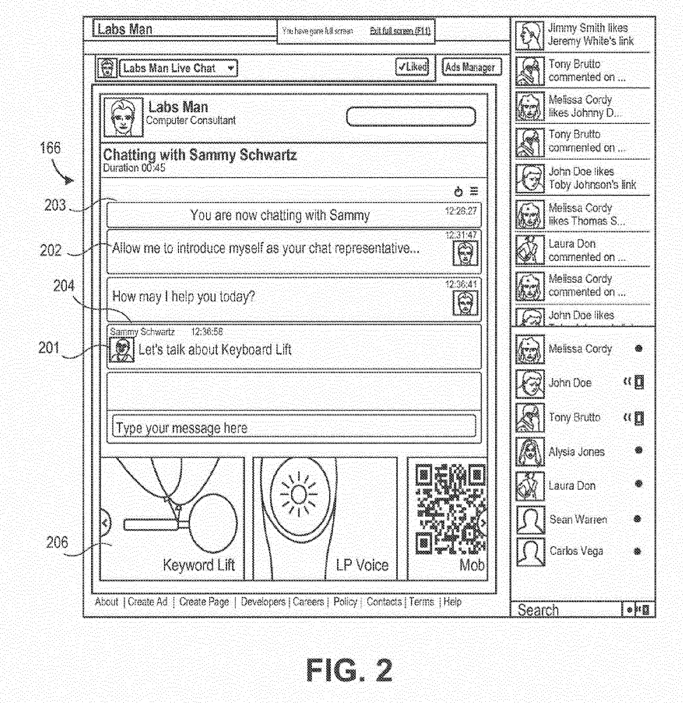

FIG. 2 is a screenshot depicting a user chat interface 166 being operated by a social-networking user at a user terminal 168. As depicted, the user chat interface 166 enables the user 201 to see messages 202 sent by an agent and information about the agent 203. The chat interface also enables the user to generate messages 204 which are sent to the agent. FIG. 2 also depicts the display of content 206 from library 138. The content displayed at 206 may be content which was selected by the engagement server 102 from within library 138, provided to the agent for selection along with other content, and then selected by the agent to be presented to the user. Alternatively, the content 206 may be content which was selected at the engagement server 102 and transmitted directly to user terminal 168 for display at the user chat interface 166, without any input being provided by the agent. Although not explicitly depicted in FIG. 2, the user may interact with the content 206 during the chat conversation, and may use the chat interface to discuss the content with the agent.

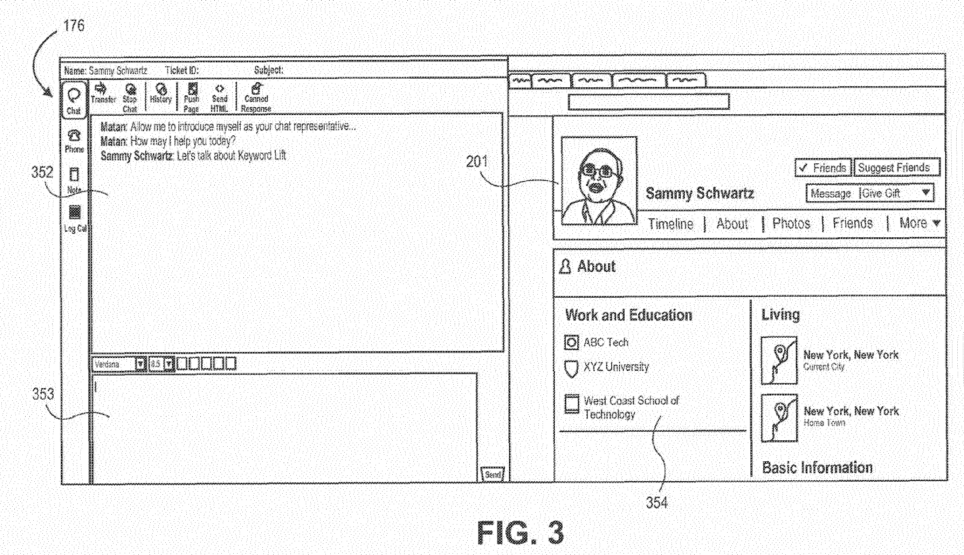

FIG. 3 is a screenshot depicting an agent chat interface 176 being operated by an agent at an agent terminal. The agent terminal may be an agent terminal such as the terminal depicted at 172. As depicted at 352, the agent interface provides a feature 353 which enables the agent to provide text for engaging the user in chat communications and sending informative messages to the user as prescribed by a client campaign strategy. The agent interface also includes an informational component 354 which displays information about the user. Prior to being displayed, engagement server 102 retrieves this user information from the user's profile in library 112, and the communications module 114 forwards the information to the agent terminal 172.

As mentioned previously, by being disposed with control of the various channels and interfaces involved in initiating and maintaining an agent-user communication session, the engagement server 102 may select an agent to engage a user and may activate a communications capability at the selected agent's terminal or workstation 172. In addition to this capability, engagement server 102 may store and aggregate personal information or performance history information with respect to individual agents. This information may be stored in the library for agent performance, profiles and forecasts 116.

Agent performance history data may be quantified using a performance statistic or combination of statistics which depicts a level of agent success in achieving the client's objectives. For example, for each agent, an average amount of sales or number of registered sales generated per contacted user may be stored and updated following each communication engagement with a user. Additionally or alternatively, multiple such metrics may be combined within a formula to yield an overall performance score. Historical agent performance may also be specified with respect to user demographics or identifiable categories of users.

When predictive module 108 determines that a particular user should be engaged using chat communication, the predictive module 108 may then employ an agent selection technique for identifying an agent with the highest likelihood of successfully engaging the user. Any number of agent selection techniques may be used for this purpose.

One such technique may be used when historical agent performance is documented with respect to user demographic groups or other user categories. In this case, library 116 may store and periodically update a separate agent performance score so as to depict an agent's history of engaging users from various user demographics or groups. An agent's performance score for a group or demographic indicates only the agent's success in engaging users who belong to the group or demographic. In this case, agent selection may involve analyzing the user's profile to determine which group or demographic the user belongs to. Next, each agent's performance score with respect to the demographic is examined, and the agent with the highest performance score is selected to engage the user.

As explained above, when an agent engages a user, the communications between the agent and user and the user's response to the engagement are tracked. Following the engagement, library 116 is updated by adding data to depict the engagement and its results. Based on this data, the agent's demographic or group score is adjusted. Also, the historical statistics library 118 may be updated with general information (i.e. information not indexed to a the user or agent) about the recently completed engagement.

The chat interfaces used by the agent and user may be configured to facilitate 3-party communication sessions. A 3-party communication session may involve the agent, user, and a social-networking first-hop contact of the user. For example, when the engagement server 102 activates a chat communication channel between an agent and user, the engagement server 102 may further transmit information causing the agent or user's interface to display a list of the user's friends who have downloaded the client interactive application 162. The list of the user's friends may include relevant information about the friends.

When provided with the friend list, the agent may select a friend and suggest that the user invite the selected friend to the chat conversation. If the user agrees to invite the selected friend, information depicting the selection is transmitted from the user's terminal 168 to the engagement server 102. The engagement server 102 may then activate a chat interface 166 on the friend's computer. Additionally, the engagement server 102 may provide the agent with additional information from the friend's user profile.

Any subsequent chat communications received at the engagement server 102 from either of the three parties are analyzed at the engagement server 102 and transmitted for display on the chat interface of every other party to the communication. In this three-party context, the engagement server 102 may apply all of the same capabilities described above with respect to a two-party chat communication session. However, the engagement server 102 may apply these same capabilities to the friend, as well as to the inviting user. Thus, the engagement server 102 may analyze the friend's communications in light of other information or data gathered with respect to the friend. The prediction module 108 may model the friend's disposition, predict the friend's responsiveness, or make content suggestions to the agent based on analysis of information or predictions about the friend. Additionally, the engagement server 102 may analyze information about the friend in conjunction with information about the user. In this way, modeling, prediction and content generation may be done in a manner that reflects the involvement of both the user and the friend in combined communication.

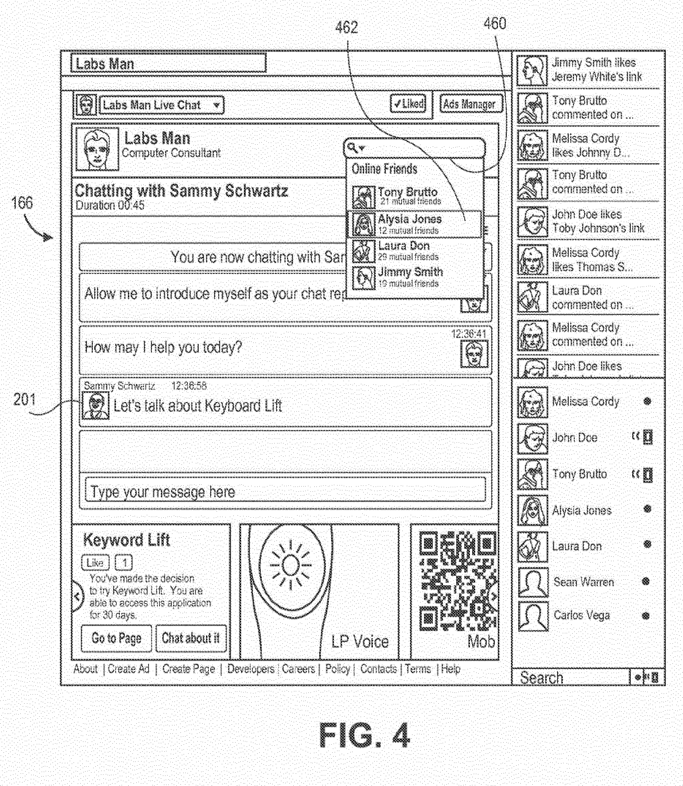

FIG. 4 is a screenshot depicting an example user interface 166 configured to enable the user to search for a social-networking friend or associate and invite that person to participate in a 3-party chat conversation with the agent. As depicted, the user interface 166 contains a search feature 460 which enables the user to both search and browse for a first-hop contact to invite to the chat conversation. The search feature may be activated during an ongoing chat conversation with an agent. As depicted in FIG. 2, the search feature is being used to invite the highlighted first-hop contact 462 to the chat conversation.

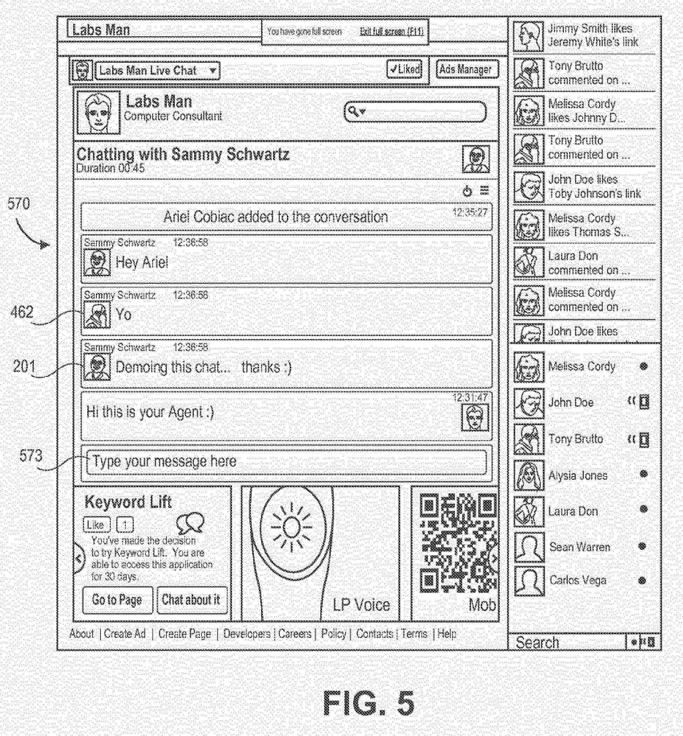

FIG. 5 is a screenshot depicting an example three-party chat interface 570 at a user terminal being operated by a participant 462 who is a first-hop contact of user 201. As depicted by the screenshot, the first-hop contact participant 462 has been invited to participate in three-party chat communication with the user 201 and agent. The first-hop contact chat interface 570 contains a feature 573 which enables the first-hop contact participant 462 to generate chat text. The chat text which the first-hop contact participant 462 provides is transmitted to the engagement server 102, which analyzes the text and forwards the text so that it will appear at both the user chat interface 166 and the agent chat interface 176. Additionally, the interface 570 displays chat text generated by the user 201 at the user interface 166, as well as chat text generated by the agent at the agent interface 176.

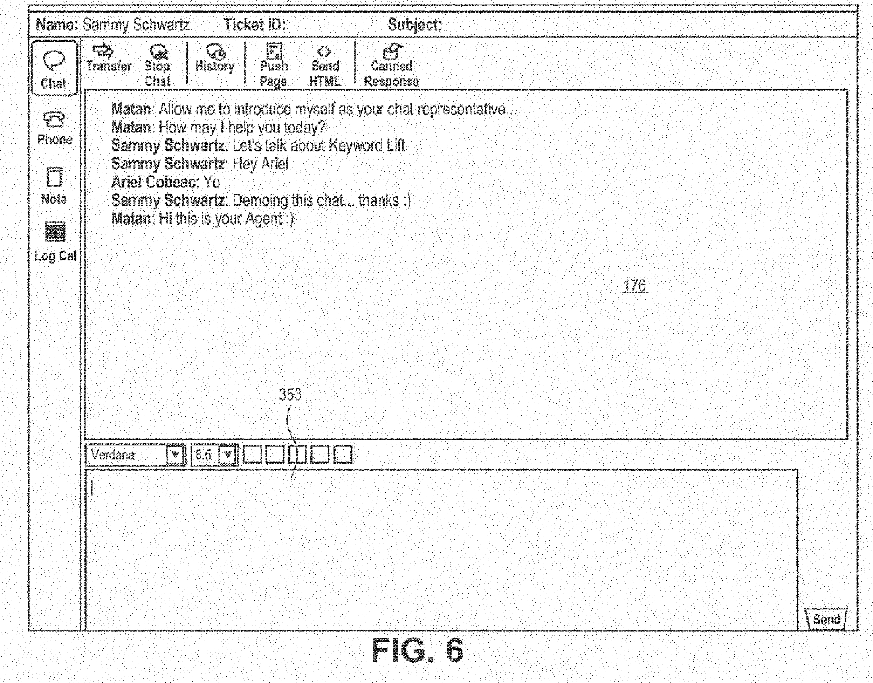

FIG. 6 is a screenshot depicting an example agent chat interface 176 operated at an agent terminal 172 during a three-party chat conversation between an agent, user, and first-hop contact of the user. As depicted by the screenshot, the agent chat interface 176 provides a feature 353 which enables the agent to generate text which is sent, via the engagement server 102, to both the user 201 and the first-hop contact participant 462. Additionally, the interface 176 displays chat text generated by the user 201 at the user interface 166, as well as chat text generated by the first hop contact participant 462.

After a three party chat conversation has concluded, the agent may use the agent notification channel to inform the engagement server 102 of the outcome of the chat conversation. The engagement server 102 may also obtain user and first-hop contact interaction tracking data accumulated by the cookies 164 operating on the web browsers used by these participants. This interaction tracking data may provide the engagement server 102 with additional information about the chat conversation outcome. In library 112, the engagement server 102 accesses the user profile for the first-hop contact 462 who participated in the recently concluded chat conversation. The engagement server 102 may update this profile to reflect the first-hop contact's participation, the outcome of the three-party chat conversation, and any other details related to the chat conversation. The engagement server 102 similarly updates the user's profile in library 112 and the historical statistics library 116 to reflect details of the three party chat conversation.

As was described above, after a user is provided with any type of campaign content or is otherwise engaged using any campaign strategy, the user's response to the campaign may be tracked by the engagement server 102 in several different ways. In certain cases - for example, when the user is highly responsive to the campaign content or makes a purchase shortly after being engaged by the campaign - it may be advantageous to inform the user's first-hop contacts about the campaign or about the user's response to it. To determine if conditions are appropriate to disseminate information in this way, the strategy module 120 may be used to identify user response data which reveal that the campaign has generated a favorable impression of the client in the mind of a user. The prediction module 108 may then execute an algorithm to analyze user profile information of the user's first-hop contacts and determine whether any of the first-hop contacts are predisposed to forming a similarly favorable impression of the client. The prediction module 108 algorithm may also identify the first-hop contacts who are most likely to be responsive to information about the campaign engagement of the responsive user. This determination may be made based on the frequency with which specific first-hop contacts communicate with the user, similarity of their personal data as compared to the personal data of the user, or any other analysis criteria based on information available to engagement server 102.

After determining first-hop contacts most likely to be responsive to information about the campaign engagement, the engagement server 102 communications module 114 transmits information to the social networking server 152 for the purpose of informing the determined first-hop contacts about the engagement of the user. The information may be used by the social-networking server 152 to generate a wall post or other message containing information about the client, the campaign, and the engagement of the user.

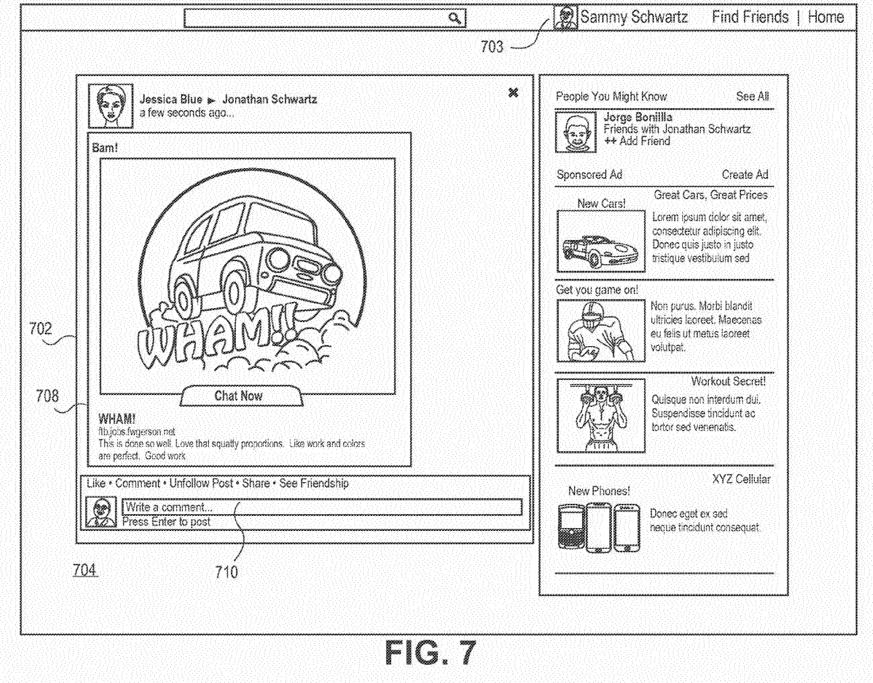

FIG. 7 depicts an example wall post designed to inform a responsive user's first-hop contact about the user's engagement by the campaign. As shown in FIG. 7, engagement server 102 provides a user's first-hop contact (the user's "associate") with information 702 about a campaign engagement of the user. The information may be posted on a wall visible on the social-networking fan page 704 maintained by the associate. The information 702 may include a URL link 708 or other contact information which enables the associate, or a viewer of the associate's wall, to access campaign information or other information about the client. Additionally, the original responsive user who was engaged by the campaign may be solicited to provide comments about the client or the client's products. These comments may be entered, for example, using a comment posting feature such as the posting feature shown at 710.

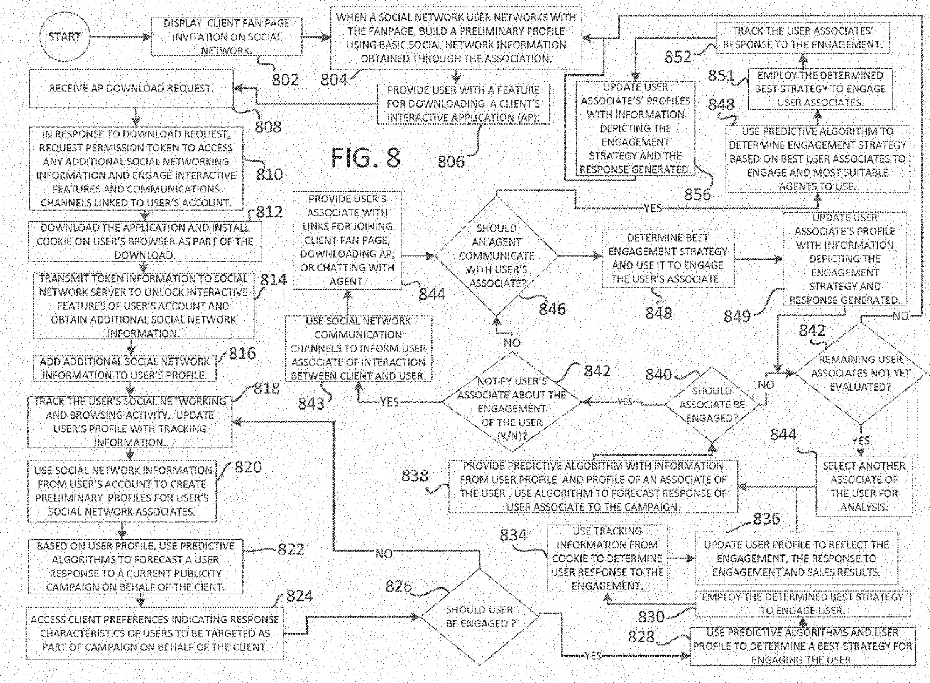

FIG. 8 is a flow diagram which depicts example operations of an engagement server in accordance with certain of the aspects of the present disclosure described above. At 802, the engagement server 102 displays or promulgates a client invitation on a social network website. As describe earlier, displaying a client in this manner may be done by registering with a social-networking server to create a client social-network account, such as the account depicted at 188 in FIG. 1. At 804, the engagement server 102 and monitors the client account 188 to detect when a social network user associates with the . When a user associates with the, the engagement server 102 initiates a user profile containing information about the user. At 806, the engagement server 102 provides a feature on the which enables the user to download a interactive application for interacting with client. At 808, the engagement server receives a request from the client to download the interactive application.

At 810, in response to the download request, the engagement server 102 requests that the downloading user grant a permission token to allow the engagement server 102 to access social networking information related to the user, and to allow the engagement server 102 to engage interactive features and communications channels linked to the user's account. At 812, the engagement server 102 downloads installation code to the user's terminal 168. The installation code causes the application 162 to execute on the user's computer 168, and installs a cookie 164 within the user's web-browser so that the user's web-browsing activities may be tracked. At 814, if the user has granted the permission token described at 810, the engagement server 102 uses the permission token to access information about the user which is stored by social-networking server 152. The token information is also used to unlock interactive features of the user's social-networking account.

At 816, the engagement server 102 updates the user profile so that the profile includes any additional user information received from the social-networking server 152. At 818, the engagement server 102 begins to track the user's social-networking an web browsing activities. Tracking may be performed by monitoring the user's social-networking page, as well as by receiving data accumulated by the cookie 164 and transmitted to the social networking server 102.

At 820, the engagement server 102 may review the user's social networking to ascertain first-hop contacts ("associates") of the user, as well as any obtainable information about specific associates of the user. Based on this review, the engagement server 102 creates preliminary profiles for each of the user's friends. Any of the preliminary profiles may later be updated in response to additional information about an associate being obtained, or in response to an associate linking to the client or downloading the client interactive application. Also, as described earlier, the information in the preliminary profile may also be used for a variety of predictive purposes.

As depicted at 822, the engagement server 102 predictive module 108 uses predictive algorithms to forecast how the user will respond to a current publicity campaign on behalf of the client. Here, for example, the predictive module 108 could predict how the user will respond to being engaged in chat communication by an agent, or how the user will respond to seeing a series of ads, banners, or email messages currently being used by the client. The predictive module 108 may analyze a variety of different campaign strategies and individually forecast results of applying each strategy to engage the user. At 824, the engagement server 102 accesses client preference information in library 110. This preference information indicates desired forecast response characteristics of users to be targeted as part of the client's campaign.

At 826, the engagement server 120 determines whether the user should be engaged on behalf of the client. This determination is made by comparing the client preferences accessed at 824 and the forecasted results determined at 822. If the forecasted results are not sufficiently promising in light of the client preferences, the engagement server 102 determines that the user should not be engaged at the present time. In response to this determination, the engagement returns to 818, and again performs the subsequently depicted steps in order to accumulate more information about the user and any new user associates, and obtain updated predictions about user responses to subsequent client campaigns.

Referring again to 826, if the forecasted results are sufficiently promising in light of the client preferences, predictive module 108 executes predictive algorithms at 828 to determine a best strategy for engaging the user. The predictive algorithms may evaluate various strategies in making this determination. The various evaluated strategies may be unique in any number of ways. For example, the strategies may differ in the medium used for communicating with the user, the message contents, communications timing, or any other aspect of communication capable of being altered to improve results.

At 830, the strategy which is determined to be best is used to engage the user. At 832, the engagement server 102 obtains tracking data depicting web-browsing activities of the user. At 834, the engagement server 102 uses this tracking data to determine the user's response to the engagement. Although not depicted, if the user is engaged by an agent through a chat interface 166, chat communications sent by the user or the agent may also be analyzed at 834 to determine the user's response to the engagement. Additionally, in this case, the agent may transmit communications indicating the agent's impressions. These communications may be transmitted to the engagement server 102 using the agent notification channel and may be analyzed at the engagement server 102 in order to further determine the user's response to the engagement.

At 836, engagement server 102 accesses the user profile in library 112 and updates the profile by adding information about the user's response to the engagement. The information may indicate, amongst other things, the user's interaction with content provided as part of the engagement, the identity of any agent who assisted the user, and whether the engagement resulted in an outcome sought by the client, such as a sale, donation, additional communication being scheduled, or any other outcome.

At 838, an iterative process commences. During the process, the engagement server 102 reviews the profiles of the user's first-hop contacts (the user's "associates") in order to identify additional users to engage as part of the campaign. As depicted at 838, the predictive module accesses information from the user's profile in library 112, and information in the profile of an associated of the user. A predictive algorithm is executed to forecast the user associate's response to the campaign. The forecasts may include forecasts specific to various candidate strategies for providing campaign content. These candidate strategies may include some or all of the same candidate strategies evaluated with respect to the user, as described at 828. The candidate strategies may be differentiated based on the medium for providing content, the use of an agent to provide content, the message, information, images, timing, display location, or key words used, or in any other manner. In evaluating a strategy, the prediction information generated by the predictive module may include sales or responsiveness likelihoods. For example, in predicting the outcome of using a particular strategy to engage the user associate, the predictive module may calculate a likelihood of the user associate deciding to make a small purchase, a likelihood of a medium purchase and a likelihood of a large purchase.

One or more of the evaluated strategies may involve informing the user's associate about the most recent engagement of the user. Informing an associate about a past engagement may involve, amongst other things, sending a message to the associate or posting information on the user's or associate's social-networking page. Regardless of the medium selected for delivering the message, this content may be used to imply that the user is interested in the client's products or services. The message may contain additional information about the client, a link to the client's and a link for downloading the client's interactive application 162.

In instances in which engagement of the user has resulted in a sale or other successful outcome, the content can describe that outcome. Furthermore, at 838, the engagement server 102 may use the user associate's profile information to determine if the associate has been responsive to any current or past campaign run by the client, or has purchased a product from the client. If the associate has been responsive or purchased a product, these associates may be informed about the client's engagement of the user in a manner that solicits the associates to provide the user with opinions or comments about the client.

At 840, engagement server 102 uses the prediction results obtained at 838 to determine whether the user's associate should be engaged as part of the client's campaign. If the engagement server 102 determines that the associate should not be engaged, the engagement server 102 determines, at 842, whether there additional unevaluated profiles for other user associates for which the predictions at 828 have not yet been made. If there are additional associates for whom a prediction has not been made, an additional user associate is considered at 844, and the predictive evaluation of this associate commences at 838 in the same manner described previously for the originally evaluated user associate. Alternatively, if there are no remaining associates of the user, the process returns to 804, thereby allowing the process to be continuously executed. In this way, additional data about the user and the user's associates may be obtained so that engagement server 102 machine-learning algorithms and prediction parameters may be updated, and so that the possibility of targeting these social-networking participants may be reevaluated as new content, strategies, and client preferences are provided, or when a new client campaign begins.

Referring back to 840, if the engagement server 102 determines that the associate should be engaged as part of the campaign, the engagement server 102 then determines whether the associate should be informed about the engagement of the user. If the engagement server 102 determines that the associate should be so informed, the process continues at 842 and 844, prior to 846. Otherwise, the process proceeds to 846.

At 843, the engagement server 102 informs the user associate about the engagement of the user. In order to provide this information, the engagement server 102 uses the client's social networking account and social-networking communication channels provided by the account. At 844, the social network server 102 provides the user's associate with additional information or content so that the associate can engage with the client's campaign if the communication provided at 842 is successful. This additional content may include a link for accessing or associating with the client's, a link for downloading the client's interactive application 162, or a link to the client's website. At 846, the engagement server 102 decided if an agent should be used to communicate with the user's associate. If the engagement server 102 determines that agent communication should not be employed, a best engagement strategy not involving an agent is selected at 848. Also, at 848, the user's associate is engaged using the selected strategy. Also, if the user associate has downloaded the client's interactive application 162, the associate's response to the engagement is tracked using web-browsing data accumulated by a cookie within the associate's web-browser. Subsequently, the user associate's profile is updated at 849 to depict the engagement targeted to the associate and the strategy used in the engagement. Also, any obtained data which depicts the associate's response to the strategy may be added to the associate's profile. After updating the profile at 849, the engagement server re-executes step 842 and subsequent procedures in the iterative process already described.

Referring again to the determination at 846, if the engagement server 102 determines that an agent should communicate with the user's associate, the prediction module algorithm is executed at 848 to determine a best engagement strategy which involves an agent. Here, determining a best engagement strategy may involve selecting an agent who is best-suited to engage the user's associate. As described above, selecting a best-suited agent may be done by evaluating the historical performance of each available agent. The agent performance measures analyzed at 848 may depict individual agent's historical performance in engaging targeted users belonging to a same demographic or group as the user's associate.

At 851, the user's associate is engaged by the selected agent in accordance with the selected engagement strategy. At 852, the user associate's response to the engagement strategy is tracked. As described previously, a social-networking participant's response to a chat engagement may be tracked using a cookie installed on the participant's web browser. The response may also be tracked in other ways, including by using agent input provided to the engagement server 102 through the agent notification channel. At 856, the user associate's profile is updated with information depicting the engagement strategy used to target the associate. The profile is also updated with information indicating the associate's response to the targeted engagement. Subsequently, the process continues by a return to 804, at which point the process is indefinitely re-iterated with respect to the same social-networking user or any other social networking user.

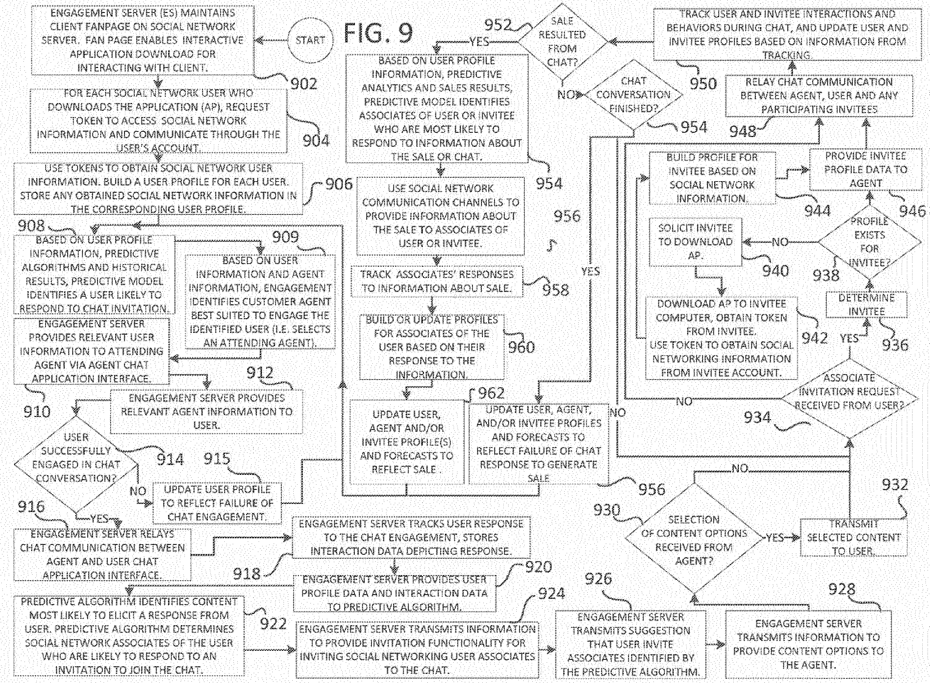

FIG. 9 depicts an additional sequence of example operations which may be performed by the engagement server 1 02, in accordance with certain of the techniques disclosed herein. The example operations of FIG. 9 commence at 902. At 902, the engagement server 102 maintains a client fanpage controlled through a social-network account registered and stored at social-network server 152. The engagement server 102 transmits information to the social networking server 152 to maintain the fanpage. The fanpage includes a feature which enables client users or visitors to download an interactive application 162 for communicating and interacting with the client. The engagement server 102 may be configured to upload the code to any visitor or user who elects to download the interactive application 162.

At 904, in response to any user initiating a download of the interactive application 162, the engagement server 102 requests that the downloading user grant a permission token. A permission token - when granted - allows the engagement server 102 to access any non-public social networking information about the user which is stored in social-networking server 152. A granted token also allows the engagement server 102 to access social networking communications channels provided through the downloading user's account.

At 906, after a token has been granted in response to the request at 904, the engagement server 102 uses the granted token to access any non-public information about the granting user which may be stored at the social-networking server 152 and made available to token holders. Also, at 906, the engagement server 102 initiates a user profile for each user who has downloaded to the client's interactive application 162. If social-networking information about any of these users is made available by social-network server 152, the information is stored in the profile of the user to whom the information corresponds.

At 908, the engagement server 102 analyzes the user profiles and historical data to determine a user (or multiple users) who is most likely to respond to a chat invitation. Then at 909, predictive module 108 individually analyzes each of the client's agents and chooses an agent to engage the user. At this stage, each analysis of a particular agent may involve predicting a likelihood of the agent successfully engaging the user through chat communication. In predicting likelihoods of agent success and selecting the agent most likely to be successful, the predictive module may evaluate information in the user's profile, historical data, and agent historical performance data in library 116.

At 910, engagement server 102 transmits information about the user to the selected agent. In order to perform this transmission, the engagement server 102 employs the communication module 114 and the agent notification channel. The agent may use the information provided by the engagement server 102 in order to make informed decisions about how best to communicate with the user. At 912, after the agent has engaged the user by sending a chat greeting, engagement server 102 transmits information about the agent to the user. This information may include the agent's name, location, expertise, or any other agent information which the client opts to provide targeted users with.

At 914, engagement server 102 monitors the chat communication channel to determine if the user has responded to the agent's engagement attempt. If the engagement is not successful, the engagement server 102 updates the targeted user's profile to reflect the unresponsiveness, as depicted at 915. The engagement server 102 adds information to the profile which depicts any number of aspects of the failed engagement strategy and engagement attempt made by the agent. In this case, as indicated in FIG. 3 by the reversion to 908 following 914, and by the procedures depicted subsequent to 908, the engagement server continues to periodically predict user responses to chat invitations, target chat engagements to selected users, accumulate information about users and engage users based on the data and predictions.

However, if, at 914, a determination is made that the user has responded to the chat engagement, the engagement server 102 then relays chat communication between the agent terminal 172 and user terminal 168, as shown at 916. As described earlier, the engagement server 102 may analyze and store any chat communication which is relayed. As part of this analysis, the predictive module 108 may model the user's disposition and make a series of predictions about the responsiveness of the user or the outcome of the chat engagement.

As depicted at 918, the engagement server 102 tracks the user's response to the chat engagement. The user's response may be determined using web browsing data accumulated by a cookie executing within the user's web browser. The response may also be determined based on the communications made by the user during the chat conversation, as well as, or in addition to information provided by the agent via the agent notification channel.

At 920, the engagement server 102 provides the predictive module 108 with information from the user's profile in library 112. This information may include information which depicts the user's response to the chat engagement. Simultaneously, the predictive module 108 may also have access to the library of client content, advertisements and information 138, as well as profile information for any of the user's first-hop contacts. At 922, the predictive module 108 analyzes the information using a predictive algorithm to predict client content most likely to elicit a desired response from the user.

The predictive algorithm 922 also identifies social networking associates of the user who are most likely to be responsive to an invitation to join the chat conversation in which the user is involved. The predictions with respect to associates of the user may involve calculating several different likelihoods with respect to each associate. For example, for any single associate, the predictive algorithm may be used to calculate a likelihood of the user agreeing to invite the associate to the conversation, a likelihood that the associate will join if invited, and likelihoods that the associate's participation will worsen (e.g. cause the user to defer a purchase which otherwise would have occurred) or improve the outcome (e.g. cause the user to make a purchase would otherwise would not have occurred) of the conversation for the client. A cumulative score may be calculated for each of the associates based on a combination of these likelihoods, and associates of the user may be ranked in order of cumulative score. One or more associates with a highest cumulative score may then be individually evaluated. Individually evaluating an associate may be performed by comparing the associate's cumulative score to a threshold score stored within the library for client preferences. Any associate for whom a cumulative score is above the threshold may be recommended to the user in order to encourage the user to invite the recommended associate to the chat conversation.

At 924, the engagement server 102 communication module 114 transmits 3-party chat invitation functionality information to the user computer. The transmitted information causes an invitation feature to be displayed at the user's chat interface. The feature enables the user to invite a friend or associate to participate in the chat conversation with the agent. At 926, the engagement server 102 communication module 114 transmits information to the user. At the user's terminal, this information causes the chat interface to display a suggestion that the user invite one or more of the recommended associates to the chat conversation.

At 928, engagement server 102 communication module 114 transmits information inform the agent about the content previously chosen by the engagement server predictive module at 922. The content information causes content options to be displayed to the attending agent at the agent's interface. The content options enable the agent to present to the user, at the agent's election, any of the content chosen by the engagement module.

At 930, the engagement server 102 communication module 114 examines communications from the agent to determine if content has been selected by the agent. If content has been selected, the engagement server 102 communication module 114 transmits the selected content to the user, based on the selection made by the agent. The transmission of the selected content is depicted at 932.

At 934, the engagement server 102 communication module 114 monitors transmissions made from the user terminal, and ascertains whether an associate invitation request has been made by the user. For so long as an invitation request is not received and the chat conversation continues, the engagement server 102 iteratively executes steps 948-954 and step 334. Steps 948-954 will be explained in greater detail in subsequent paragraphs.

However, it an invitation is received at 934, the engagement server determines the invitee at 936. At 938, the engagement server 102 evaluates library 112 to determine if a profile for the invitee exists. If a profile does exists, the engagement server communication module 114 transmits relevant information from the invitee's profile to the attending agent. This information may include information about the invitee's name, age, interests, background, location of residence, or any other information which could potentially assist the attending agent in furthering the goals of the client's campaign during communications with the invitee and user. At 940, if an invitee profile does not exist in library 112, the engagement server 102 communications module transmits information for soliciting the invitee to download the mobile application 162 for interacting with the client.

At 942, after the invitee has requested to download the application 162, the engagement server 102 communication module 114 downloads the application code to the invitee computer, and obtains a token from the invitee. Here, the token is obtained in a manner similar to the process described at 906, in which a token was obtained from the user. As is further depicted at 942, once the token is obtained, engagement server 102 communications module 114 uses the token to access social networking information associated with the invitee's social networking account, and stored at the social-networking server 152.

After social-networking information from the invitee's account is obtained, the engagement server 102 creates and stores a profile of the invitee, as depicted at 944. The profile is stored in library 1 12 and is initiated so as to contain the social-networking information about the invitee which is obtained from social-networking server 152. Additional information about the invitee may be saved in the invitee profile. This additional information may include, amongst other things, information depicting the invitation of the invitee to the chat conversation, information indicating that the invitee was responsive to the invitation, or information identifying the agent and user participating in the conversation at the time of the invitation. If the invitee was suggested to the user at 926, the invitee profile may indicate this fact, in addition to the prediction module algorithm or algorithmic parameters which were used when the prediction module selected the invitee to be suggested to the user, at 922.

At 946, the engagement server 102 communications module 114 transmits information from the invitee profile, as was described above. At 948, the engagement server 102 communications module relays chat communications between the agent chat interface 176, the user chat interface 166, and the chat interface of a participating invitee, if an invitee is present. When any party to the conversation transmits chat text, the chat text is analyzed at the engagement server 102 and forwarded by communications module 114 for display at each party's interface, along with an indication of the party who provided the text. As was described previously with regards to engagement server 102 analysis of chat text, the analysis may include modeling the disposition of any of the chat conversation participants, and predicting the responsiveness of any of these users to content options or communications strategies implemented by the agent.

At 950, the engagement server 102 tracks user and invitee (if an invitee is participating) interactions and behaviors during the chat conversation, and updates the user and invitee profiles based on the interactions and behaviors. Here, for example, a cookie 164 may be used to detect when the user or invitee has clicked on an image or a URL link provided by the agent, or when either of these participants has opened "shopping cart" or page for executing purchases or transactions. Also, at 950 the user and invitee profiles are updated to reflect the user and invitee interactions and behaviors, respectively.

At 952, the engagement server 102 determines whether a sale, purchase or other intended outcome has resulted during the chat communication. If a sale has not yet resulted, the engagement module 102 determines, at 953, whether the conversation has terminated. This determination may be made based on input provided by the agent, via the agent notification channel. Alternatively, the determination may be made based on analysis of the communications previously related between the parties to the conversation.

If, at 953, the engagement server 102 determines that chat communication is continuing, a subsequent iteration of steps the process returns to 934, and the steps depicted at 934 and thereafter are reiterated. However, if the engagement server 102 determines that communication has ceased, the user and invitee (if applicable) profiles in library 112 are updated at 955 to reflect that an intended outcome did not result from the engagement. In this case, the procedures beginning at 908 are then iteratively repeated so that the user and invitee may later be considered for an additional chat engagement, and so additional users may be targeted using chat based on the information obtained from engaging the user and invitee.

If, at 952, engagement server 102 determines that the chat communication has resulted in a sale or other desired outcome, the predictive module is used at 954 to identify associates of the user or invitee who are most likely to be responsive to information about the purchase made by the invitee or user. To perform this identification, the predictive module may analyze the profiles of the user or invitee, as well as historical data from library 118. At 956, if any of the identified associates are predicted to be sufficiently responsive, the engagement server 102 communications module uses communication channels provided by the social network in order to communicate with the identified associates, and inform them about the sale.

At 958, the engagement server 102 tracks the associates' responses to the information about the sale. Here, the responses may be tracked by scanning a list of client members to determine if an associate has joined the following distribution of the sale information. Alternatively, some of the associates informed about the sale may have already joined the and downloaded the client interactive application 162. In the case of these associates, the cookie installed on these associates' machines may provide additional information for response tracking. Also, response tracking may be performed by analyzing social-networking messages sent to the user or invitee for indications about whether these participants have been asked about the client, the purchase, or the chat engagement.

At 960, the engagement server 102 initiates and stores a profile in library 112 for each user or invitee associate selected to receive information about the chat conversation. Each initiated profile for a user or invitee associate stores information depicting that person's response to the information about the chat communications. If there are any user or invitee associates who were informed about the chat communication and for which a profile already exists, the existing profile is updated to depict the associate's response to information about the user's chat communication.

At 962, the profiles of the user and invitee in library 112 are updated to reflect details of the sale resulting from the chat communication. Also, the library for agent performance 116 is updated to reflect details of the successful outcome obtained by the agent. Subsequently, the procedures beginning at 908 are iteratively repeated so that the user and invitee may later be considered for an additional chat engagement, and so that additional users may be targeted for chat engagements, based on the information obtained from engaging the user and invitee.

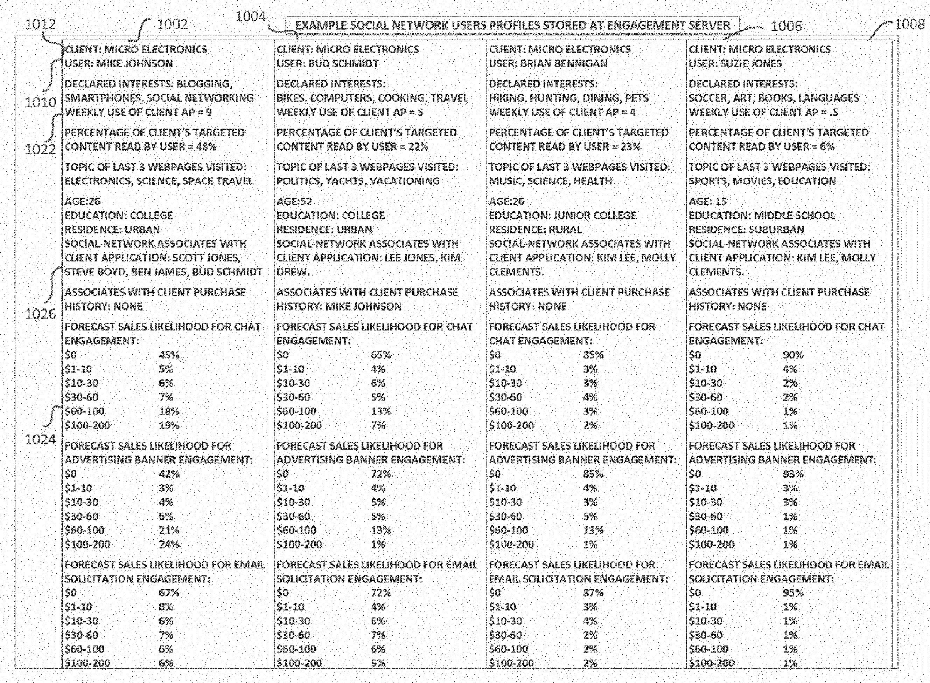

FIG. 10 is a simplified depiction of example social-networking user profiles stored in library 112. The profiles of FIG. 10 are provided for example purposes only, and FIG. 10 depicts only one of the many ways, within the scope of the present disclosure, in which user profiles may be formatted and used. In fact, a user profile within the scope of the present disclosure need not have any of the features specified in FIG. 10, and may include additional features or information which would be recognizable to a person of ordinary skill in the art.

FIG. 10 depicts four user profiles 1002, 1004, 1006 and 1008. Each profile includes name or user identification information 1010. Engagement server 102 uses the name or user identification information 1010 to link the information in the profile to the social networking user described by the information. Also, as depicted at 1012, each profile includes a name of the client for which the profile has been obtained and is used. The client identifier 1012 may be used primarily when the engagement server 102 implements campaigns on behalf of more than one client.

As depicted, user profiles may include personal information about the social-networking user described by the profile. In the user profiles of FIG. 10, personal information includes a user age, education level, residence description 1018 (rural, urban, suburban) and interests. As described previously, the personal information in a user profile may be obtained from a wide variety of sources. Personal information may be obtained when a user associates with a client fan page and the engagement server is able to access information the user has made available to social-networking associates. Additionally, when a user downloads the client mobile application 162 and provides a token to the engagement server 102, the engagement server 102 may use the token to obtain certain additional social-networking information which is related to the user and stored at a social-networking server such as server 152.

The user profiles may also include user interaction and behavior information learned by engagement server 102 through tracking a user's web-browsing behaviors and content interaction. For example, as shown at 1022, each user's profile contains information about the frequency with which the profiled user operates the client interactive application 162, and the topics of webpages most recently visited by the profiled user.

As depicted at 1026, the user profiles may include information about a user's social-networking associations with first-hop contacts. This information may include information about the relationships between a user's first-hop contacts and the client. For example, the user profile of Mike Johnson indicates that he is associated with user Bud Schmidt through the social-network. Bud Schmidt's user profile indicates that he is associated with Mike Johnson. However, Bud Schmidt's profile also indicates that Mike Johnson has purchased a product from the client Micro Electronics. In calculating Bud Schmidt's responsiveness to a Micro Electronics campaign, the predictive module 108 may adjust its prediction in light of Bud Schmidt's association with the purchaser of a Micro Product.

The user profiles 1002, 1004, 1006 and 1008 also include prediction information 1024 calculated for each user. As described previously, these predictions may be calculated by predictive module 108 at any point in time, and may be periodically updated as information in the user profile changes, or any additional data relevant to the forecasts is obtained or learned from other social-networking users and other engagements of users chosen for targeting by engagement server 102. For example, a forecast may be updated after a user has ignored an engagement that was forecasted to have a high likelihood of success, or after a user has demonstrated responsiveness to an engagement. The forecasts may also be updated periodically so as to reflect machine learning advancements or changes in algorithmic parameters which could affect the forecasts. The predictive module 108 may generate predictive forecasts for a user based on any current information in the user's profile, historical data in library 118, or information in the profiles of other users.

The engagement server 102 may use the forecasts in a user's profile to determine whether a user should be engaged as part of the client's campaign, and how a user selected for engagement should be engaged. For example, the engagement server 102 may determine that Mike Johnson is a user who should be engaged, based on the calculated likelihoods that big-ticket sales will result from engaging this user. The engagement server 102 may then analyze the three depicted strategies to determine a best strategy for engaging Mike Johnson. Based on the relatively higher success rates predicted for an advertising banner strategy, the engagement server 102 may determine that an advertising banner is most advantageous.

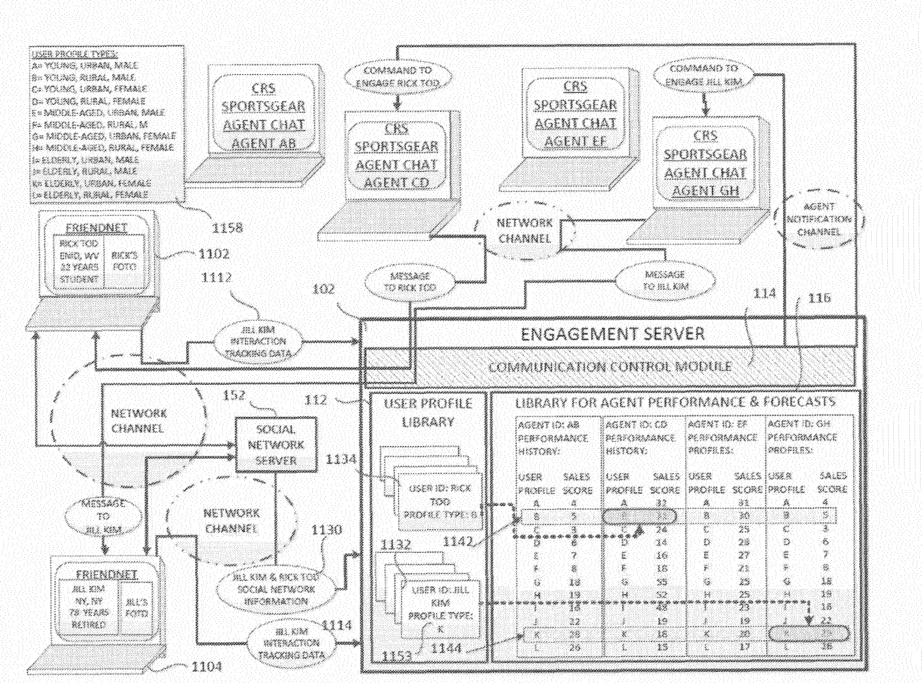

FIG. 11 depicts certain aspects of example operations which, in accordance with the methods of the present disclosure, may be used to engage social-networking users. FIG. 11 depicts two user terminals 1102 and 1104. User terminal 1102 is operated by social-networking user Rick Tod. User terminal 1104 is operated by social-networking user Jill Kim. As depicted, a client interactive application 162 is installed at terminal 1102, and at terminal 1104. As described previously, when downloaded, a client interactive application 162 may be accompanied with a cookie which executes within a web-browser at the downloading user's terminal. Thus, user terminal 1102 and 1104 shall be understood to execute code for operating a cookie in this way. Thus, at user terminals 1102 and 1104, the cookie causes interaction data 1112, 1114 to be transmitted, via a network channel, to engagement server 102.

Additionally, while users Jill Kim and Rick Tod are logged in to their social-networking accounts at user terminals 1102 and 1104, information is exchanged between the user terminals and social-networking server 152. In this way, social networking server 152 may update Rick Tod's social networking account and Jill Kim's social networking account. Communications from social networking server 152 may also enable social networking communications from first-hop contacts of Jill Kim and Rick Tod to be provided to these user's for viewing at terminals 1102 and 1104.

Using tokens received when Rick Tod and Jill Kim downloaded the client interactive application 162, engagement server 102 may query social network server 152 for social-networking information about these users. In response to the query, social network server 152 transmits social network information 1130 to engagement server 102.

At engagement server 102, interaction data 1112 and 1114 is used, along with social-networking data 530, to initialize and update Jill Kim's profile 1132 and Rick Tod's profile 1134. Although not explicitly depicted in FIG. 11, each user profile 1132 and 1134 stores personal information about the user described by the profile. The personal information 1152 includes age-group information (young, middle-aged, elderly), type of residence (rural, urban) and user gender information. The user profile information is summarized by a user profile type 1153 based on the user's personal information. As shown, each user's profile type 1153 is expressed as one of the alphabetic letters from A-L. The profile type 1153 letters are assigned such that each letter maps to a unique combination of user profile information, as explained by the user profile table at 1158.

Engagement server 102 also is depicted as containing a library for agent performance profiles and forecasts 116. As depicted, library 116 stores a collection of scores to describe each agent's historical sales performance. Each individual score within an agent's collection of scores indicates the agent's success in engaging users categorized within the specific profile type indexed to the score. For example, agent AB is depicted as having been evaluated with a score of 28 with respect to users of profile type K. This particular score indicates agent AB's historical effectiveness in engaging users who are elderly females living in an urban area. With respect to users of profile group K, agent AB has a higher score (28) than agent CD (18). This higher score indicates that agent AB, in engaging elderly, urban females, has historically performed better, based on the evaluation criteria in use, than has agent CD.

FIG.11 depicts a situation in which strategy module 120 (strategy module 120 is not shown in FIG. 11) has determined that both Jill Kim and Rick Tod should be engaged in chat communication. The highlighting, shaded boxes, and dashed lines at 1142 and 1 144 show a decision making process used to select agents for engaging these two selected users. In order to select an agent to engage Rick Tod, as depicted at 1144, the strategy module 120 evaluates Rick Tod's user profile 1134 and determines that Rick Tod is categorized as a type "B" user. Based on this determination, the strategy module 120 evaluates each agent performance profile based on agent historical performance in engaging type B users. The strategy module 120 selects Agent CD because this agent is the agent with the highest score with respect to type B users. The strategy module performs similar analysis with respect to Jill Kim, who, as an elderly, urban, female, is categorized as a type K user. Agent GH is selected to engage Jill Kim because GH has the highest score with respect to type K users.

In response to the selection of agents CD and GH by the strategy module, communication module 114 transmits commands to the consoles of these selected agent. The commands are transmitted through the agent notification channel and notify agent CD and GH that they should attempt to communicate with Rick Tod and Jill Kim, respectively. Each of these commands may also be accompanied by information from the user's profile. By providing user profile information prior to an agent's attempt to engage the user, the agent may be better able to personalize and customize communications with the user to increase the likelihood of eliciting a user response. Subsequently, in response to the command to engage Rick Tod, agent CD generates an engagement message addressed to Rick Tod, and then sends the message to engagement server 102 over a network channel. Additionally, agent GH generates an engagement message addressed to Jill Kim and sends the message to the engagement server using the same network channel. These messages are received at communication control module. The communication control module analyzes the messages, records data depicting the messages, stores the data in user profiles 1132 and 1134, and forwards the messages to Rick Tod and Jill Kim by way of a network channel.

The methods, systems, devices, implementations, and embodiments discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process that is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the invention. Also, a number of steps may be undertaken before, during, or after the above elements are considered. Accordingly, the above description does not bound the scope of the claims.

The use of "capable of", "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.

The following numbered paragraphs contain statements of broad combinations of technical features in accordance with various aspects of devices and methods disclosed herein:
1. A computer-implemented method, comprising:
   transmitting social network application information, wherein the social network application information is transmitted by a computing-device and is used to provide a social network application interface on a social networking platform;
   receiving information depicting interactions involving the social network application interface;
   generating interaction data based on the received information, wherein the interaction data is generated by a computing device;
   forecasting likelihoods of outcomes occurring in response to providing content through the social networking platform, wherein forecasting likelihoods is based on the generated interaction data;
   deriving an interaction strategy for selectively providing the content, wherein the interaction strategy is based on the forecasted likelihoods; and
   transmitting content information, wherein the content information includes information depicting the interaction strategy, wherein the content information is used to provide the content on the social networking platform, and in accordance with the interaction strategy.
2. The method of paragraph 1, wherein receiving information includes:
   obtaining information related to a first member of the social networking platform,
   wherein the information related to the first member is obtained by:
   tracking interactions of the first member with the social network application interface; or
   accessing information provided by the first member while utilizing the social networking platform.
3. The method of paragraph 1, wherein receiving information includes:
   accessing information depicting social networking activities of the first member, wherein social networking activities include activities facilitated by the social networking platform;
   tracking web browsing activities of the first member, the web browsing activities occurring apart from the social networking platform; or
   tracking internet purchasing activities of the first member, the purchasing activities occurring apart from the social networking platform.
4. The method of paragraph 3, wherein forecasting likelihoods of multiple outcomes includes forecasting a likelihood of a business outcome occurring after providing the content to the first member, wherein forecasting the likelihood of the business outcome is based on the obtained information related to the first member.
5. The method of paragraph 2, wherein generating interaction data includes:
   generating data depicting browsing characteristics; or
   generating data depicting consumer tendencies.
6. The method of paragraph 1, wherein forecasting likelihoods of multiple outcomes includes:
   estimating a first likelihood that a targeted response will result from providing the content in a first manner; and
   estimating a second likelihood that a targeted response will occur after providing the content in a second manner.
7. The method of paragraph 1, wherein forecasting likelihoods of multiple outcomes includes forecasting a number of interactions expected to occur after providing the content in a first manner.
8. The method of paragraph 7, wherein forecasting the number of interactions expected to occur includes:
   calculating a number of transactions anticipated to occur after providing the content in the first manner; or
   calculating a volume of sales anticipated to occur after providing the content in the first manner.
9. The method of paragraph 2, wherein:
   the social network application interface includes a chat communication interface;
   deriving the strategy includes specifically determining to direct the content to the first member; and
   the content includes a chat invitation message, wherein the chat invitation message appears at the chat communication interface and proposes chat communication with an attending agent.
10. The method of paragraph 9, further comprising:
   selecting an agent to be the attending agent, wherein the selected agent is selected from a group of agents, and wherein selecting includes:
   analyzing agent information depicting traits, personal characteristics, experience, expertise, or historical sales performance of individual agents of the group;
   analyzing the obtained information related to the first member; and
   determining that the selected agent is more likely than other agents of the group to elicit a prioritized consumer response from the first member, wherein determining is based on the analyzed agent information and the obtained information related to the first member.
11. The method of paragraph 9, further comprising:
   after the chat invitation message appears at the chat communication interface, tracking interactions of the first member with the chat communication interface;
   deriving and storing data based on the tracked interactions with the chat communication interface, wherein the stored data:
      indicates that the first member ignored the chat invitation message;
      indicates that the chat invitation message elicited chat communication from the first member;
      indicates that the chat invitation elicited a purchase made by the first member;
      describes the chat invitation message; or
      describes the tracked interactions of the first member with the chat communication interface.
12. The method of paragraph 11, further comprising:
   altering the interaction strategy based on the derived and stored data; and
   transmitting new content information, wherein the new content information includes information depicting the altered interaction strategy, wherein the new content information is used to provide new content on the social networking platform, and wherein providing new content is done in accordance with the altered interaction strategy.
13. The method of paragraph 9, wherein the invitation facilitates a chat session during which chat communication between the attending agent and the first member occurs using the chat communication interface.
14. The method of paragraph 12, further comprising:
   transmitting first display information, wherein first display information is used to provide the attending agent with the obtained information related to the first member.
15. The method of paragraph 9, further comprising:
   receiving suggestion information from the attending agent, wherein the suggestion information depicts interactive content selected by the attending agent; and
   transmitting interactive information in response to the suggestion information, wherein the interactive information is used to display the interactive content to the first member, wherein the interactive content is displayed on the chat communication interface.
16. The method of paragraph 9, further comprising:
   determining to target a second member of the social networking platform, wherein determining to target the second member includes:
      accessing communication information depicting past communication between the second member and the first member, and determining to target the second member based on the communication information; or
      accessing affiliation information depicting an affiliation that is common to both the first member and the second member, and determining to target the second member based on the affiliation information; and
   in response to determining to target the second member, transmitting information used to provide additional content to the second member.
17. The method of paragraph 16, wherein the additional content includes:
   an invitation to join an ongoing chat communication session involving the first member;
   information about a past chat communication session;
   information about a product, service, company; or
   information about consumer activity initiated by the first member.
18. The method of paragraph 16, wherein determining to target the second member further includes:
   accessing data depicting interactions of the second member with the social networking platform;
   generating a profile of the second member, wherein generating the profile includes attributing family information, traits, demographic information, lifestyle information, educational information, employment information, preferences, tastes, patterns, behaviors, or tendencies to the second member;
   forecasting a likelihood that a business outcome will occur after providing the additional content to the second member, wherein forecasting is based on the profile,
   and wherein determining to target the second member is further based on the forecasted likelihood that a targeted business outcome will occur after providing the additional content to the second member.
19. A system, comprising:
   one or more processors;
   one or more non-transitory computer-readable storage mediums containing instructions configured to cause the one or more processors to perform operations including:
      transmitting social network application information, wherein the social network application information is used to provide a social network application interface on a social networking platform;
      receiving information depicting interactions involving the social network application interface;
      generating interaction data based on the received information, wherein the interaction data is generated by a computing device;
      forecasting likelihoods of outcomes occurring in response to providing content through the social networking platform, wherein forecasting likelihoods is based on the generated interaction data;
      deriving an interaction strategy for selectively providing the content, wherein the interaction strategy is based on the forecasted likelihoods; and
      transmitting content information, wherein the content information includes information depicting the interaction strategy, wherein the content information is used to provide the content on the social networking platform, and in accordance with the interaction strategy.
20. The system of paragraph 19, wherein receiving information includes:
   obtaining information related to a first member of the social networking platform, wherein the information related to the first member is obtained by:
   tracking interactions of the first member with the social network application interface; or
   accessing information provided by the first member while utilizing the social networking platform.
21. The system of paragraph 19, wherein receiving information includes:
   accessing information depicting social networking activities of the first member, wherein social networking activities include activities facilitated by the social networking platform;
   tracking web browsing activities of the first member, the web browsing activities occurring apart from the social networking platform; or
   tracking internet purchasing activities of the first member, the purchasing activities occurring apart from the social networking platform.
22. The system of paragraph 20, wherein:
   the social network application interface includes a chat communication interface;
   deriving the strategy includes specifically determining to direct the content to the first member; and
   the content includes a chat invitation message, wherein the chat invitation message appears at the chat communication interface and proposes chat communication with an attending agent.
23. The system of paragraph 22, wherein the operations further include:
   selecting an agent to be the attending agent, wherein the selected agent is selected from a group of agents, and wherein selecting includes:
   analyzing agent information depicting traits, personal characteristics, experience, expertise, or historical sales performance of individual agents of the group;
   analyzing the obtained information related to the first member; and
   determining that the selected agent is more likely than other agents of the group to elicit a prioritized consumer response from the first member, wherein determining is based on the analyzed agent information and the obtained information related to the first member.
24. The system of paragraph 22, wherein the operations further include:
   after the chat invitation message appears at the chat communication interface, tracking interactions of the first member with the chat communication interface;
   deriving and storing data based on the tracked interactions with the chat communication interface, wherein the stored data:
      indicates that the first member ignored the chat invitation message;
      indicates that the chat invitation message elicited chat communication from the first member;
      indicates that the chat invitation elicited a purchase made by the first member;
      describes the chat invitation message; or
      describes the tracked interactions of the first member with the chat communication interface.
25. A computer-program product, tangibly embodied in a machine-readable non-transitory storage medium, including instructions configured to cause a data processing apparatus to perform operations including:
   transmitting social network application information, wherein the social network application information is used to provide a social network application interface on a social networking platform;
   receiving information depicting interactions involving the social network application interface;
   generating interaction data based on the received information, wherein the interaction data is generated by a computing device;
   forecasting likelihoods of outcomes occurring in response to providing content through the social networking platform, wherein forecasting likelihoods is based on the generated interaction data;
   deriving an interaction strategy for selectively providing the content, wherein the interaction strategy is based on the forecasted likelihoods; and
   transmitting content information, wherein the content information includes information depicting the interaction strategy, wherein the content information is used to provide the content on the social networking platform, and in accordance with the interaction strategy.
26. The computer-program product of paragraph 25, wherein receiving information includes:
   obtaining information related to a first member of the social networking platform, wherein the information related to the first member is obtained by:
   tracking interactions of the first member with the social network application interface; or
   accessing information provided by the first member while utilizing the social networking platform.
27. The computer-program product of paragraph 25, wherein receiving information includes:
   accessing information depicting social networking activities of the first member, wherein social networking activities include activities facilitated by the social networking platform;
   tracking web browsing activities of the first member, the web browsing activities occurring apart from the social networking platform; or
   tracking internet purchasing activities of the first member, the purchasing activities occurring apart from the social networking platform.
28. The computer-program product of paragraph 26, wherein:
   the social network application interface includes a chat communication interface;
   deriving the strategy includes specifically determining to direct the content to the first member; and
   the content includes a chat invitation message, wherein the chat invitation message appears at the chat communication interface and proposes chat communication with an attending agent.
29. The computer-program product of paragraph 28, wherein the operations further include:
   selecting an agent to be the attending agent, wherein the selected agent is selected from a group of agents, and wherein selecting includes:
   analyzing agent information depicting traits, personal characteristics, experience, expertise, or historical sales performance of individual agents of the group;
   analyzing the obtained information related to the first member; and
   determining that the selected agent is more likely than other agents of the group to elicit a prioritized consumer response from the first member, wherein determining is based on the analyzed agent information and the obtained information related to the first member.
30. The computer-program product of paragraph 28, wherein the operations further include:
   after the chat invitation message appears at the chat communication interface, tracking interactions of the first member with the chat communication interface;
   deriving and storing data based on the tracked interactions with the chat communication interface, wherein the stored data:
      indicates that the first member ignored the chat invitation message;
      indicates that the chat invitation message elicited chat communication from the first member;
      indicates that the chat invitation elicited a purchase made by the first member;
      describes the chat invitation message; or
      describes the tracked interactions of the first member with the chat communication interface.

## Claims

1. A computer-implemented method, comprising:
accessing an interface, wherein the interface is configured to interact with one or more user profiles, and wherein a user profile is associated with a social media network;
detecting an interaction between the interface and a user profile, wherein the profile indicates an association with one or more social-networking associates;
accessing interaction data associated with the one or more social-networking associates;
evaluating, using a machine-learning technique, the interaction data to produce a model corresponding to the one or more social-networking associates, the model representing a likely response of a social-networking associate, and wherein the interaction data and the model is continuously updated as new interactions between the interface and the one or more social-networking associates are detected;
determining an interaction strategy using the interaction data and the model, wherein the interaction strategy is configured to increase a likelihood of a response to an engagement, wherein the engagement targets a social-networking associate of the one or more social-networking associates and the interaction strategy is dynamically updated as the interaction data is updated; and
facilitating a communication according to the interaction strategy, wherein the model is used to determine which communication channel to use to facilitate the communication.

2. The computer-implemented method of claim 1, wherein the interaction strategy is associated with a communication channel, and wherein facilitating the communication includes transmitting the communication using the communication channel.

3. The computer-implemented method of claim 1, wherein determining the interaction strategy includes evaluating the interaction data to select at least one social-networking associate from the one or more social-networking associates, and wherein the selected at least one social-networking associate is a target for the engagement.

4. The computer-implemented method of claim 1, wherein the engagement includes interacting with the interface associated with a client device.

5. The computer-implemented method of claim 1, wherein determining the interaction strategy includes generating a plurality of interaction strategies using the interaction data, and wherein communication approaches for two or more interaction strategies differ from each other.

6. The computer-implemented method of claim 1, wherein the interaction corresponds to associating the profile to a client device using the interface.

7. A system, comprising:
one or more data processors; and
a non-transitory computer-readable storage medium containing instructions which, when executed on the one or more data processors, cause the one or more data processors to perform operations including:
accessing an interface, wherein the interface is configured to interact with one or more user profiles, and wherein a user profile is associated with a social media network;
detecting an interaction between the interface and a user profile, wherein the user profile indicates an association with one or more social-networking associates;
accessing interaction data associated with the one or more social-networking associates;
evaluating, using a machine-learning technique, the interaction data to produce a model corresponding to the one or more social-networking associates, the model representing a likely response of a social-networking associate, and wherein the interaction data and the model is continuously updated as new interactions between the interface and the one or more social-networking associates are detected;
determining an interaction strategy using the interaction data and the model, wherein the interaction strategy is configured to increase a likelihood of a response to an engagement, wherein the engagement targets a social-networking associate of the one or more social-networking associates, and the interaction strategy is dynamically updated as the interaction data is updated; and
facilitating a communication according to the interaction strategy, wherein the model is used to determine which communication channel to use to facilitate the communication.

8. The system of claim 7, wherein the interaction strategy is associated with a communication channel, and wherein facilitating the communication includes transmitting the using the communication channel.

9. The system of claim 7, wherein determining the interaction strategy includes evaluating the interaction data to select at least one social-networking associate from the one or more social-networking associates, and wherein the selected at least one social-networking associate is a target for the engagement.

10. The system of claim 7, wherein the engagement includes interacting with the interface associated with a client device.

11. The system of claim 7, wherein determining the interaction strategy includes generating a plurality of interaction strategies using the interaction data, and wherein communication approaches for two or more interaction strategies differ from each other.

12. The system of claim 7, wherein the interaction corresponds to associating the profile to a client device using the interface.

13. A computer-program product tangibly embodied in a non-transitory machine-readable storage medium, including instructions configured to cause a data processing apparatus to perform operations including:
accessing an interface, wherein the interface is configured to interact with one or more user profiles, and wherein a user profile is associated with a social media network;
detecting an interaction between the interface and a user profile, wherein the user profile indicates an association with one or more social-networking associates;
accessing interaction data associated with the one or more social-networking associates;
evaluating, using a machine-learning technique, the interaction data to produce a model corresponding to the one or more social-networking associates, the model representing a likely response of a social-networking associate, and wherein the interaction data and the model is continuously updated as new interactions between the interface and the one or more social-networking associates are detected;
determining an interaction strategy using the interaction data and the model, wherein the interaction strategy is configured to increase a likelihood of a response to an engagement, wherein the engagement targets of the one or more social-networking associates, and the interaction strategy is dynamically updated as the interaction data is updated; and
facilitating a communication according to the interaction strategy, wherein the model is used to determine which communication channel to use to facilitate the communication.

14. The computer-program product of claim 13, wherein the interaction strategy is associated with a communication channel, and wherein facilitating the communication includes transmitting the communication using the communication channel.

15. The computer-program product of claim 13, wherein determining the interaction strategy includes evaluating the interaction data to select at least one social-networking associate from the one or more social-networking associates, and wherein the selected at least one social-networking associates is a target for the engagement, or,
wherein the engagement includes interacting with the interface associated with a client device, or,
wherein determining the interaction strategy includes generating a plurality of interaction strategies using the interaction data, and wherein communication approaches for two or more interaction strategies differ from each other.
